# EUROPÄISCHE PATENTSCHRIFT

(11) **EP 3 490 941 B1**
(45) Veröffentlichungstag und Bekanntmachung des Hinweises auf die Patenterteilung: **31.08.2022**
(21) Anmeldenummer: 17745187.9
(22) Anmeldetag: 27.07.2017
(51) Int. Cl.: C02F 3/30, C02F 3/08, C02F 3/10, B01J 19/18, C02F 101/16

(54) **VERFAHREN UND REAKTOR ZUR BIOLOGISCHEN STICKSTOFFELIMINATION MIT AUTOTROPHER AMMONIUMOXIDATION UND ANSCHLIESSENDER DENITRIFIKATION**
METHOD AND REACTOR FOR BIOLOGICALLY ELIMINATING NITROGEN, USING AUTOTROPHIC AMMONIUM OXIDATION AND SUBSEQUENT DENITRIFICATION
PROCÉDÉ ET RÉACTEUR POUR L'ÉLIMINATION BIOLOGIQUE DE L'AZOTE PAR OXYDATION AUTOTROPHE DE L'AMMONIUM SUIVIE D'UNE DÉNITRIFICATION

(30) Priorität: 27.07.2016 DE 102016113796
(43) Veröffentlichungstag der Anmeldung: 05.06.2019
(73) Patentinhaber: WTE Wassertechnik GmbH, 45136 Essen (DE)
(72) Erfinder: WOTRUBEZ, Herbert, 65552 Limburg (DE); SCHRÖDER, Ralf, 45239 Essen (DE)
(74) Vertreter: Von Rohr Patentanwälte Partnerschaft mbB
(86) Internationale Anmeldenummer: PCT/EP2017/069094
(87) Internationale Veröffentlichungsnummer: WO 2018/019968

(56) Entgegenhaltungen:
- WO-A1-2007/077298
- US-A1- 2011 253 625
- US-A1- 2012 152 832
- US-A1- 2015 151 994

## Beschreibung

Die vorliegende Erfindung stellt auf das technische Gebiet der biologischen Stickstoffelimination aus Rohwasser mit autotropher Nitrifikation und anschließender Denitrifikation ab.

Vor diesem Hintergrund betrifft die vorliegende Erfindung ein Verfahren zur biologischen Stickstoffelimination. Das in diesem Zusammenhang beschriebene erfindungsgemäße Verfahren kann insbesondere als nachgeschaltete Verfahrensstufe zu konventionellen Verfahren eingesetzt werden. Bei dem Verfahren kann es sich zudem um ein Verfahren im Sinne eines *Advanced Nitrogen Elimination System* ("ANELIS") handeln. Darüber hinaus betrifft die vorliegende Erfindung einen Reaktor zur biologischen Stickstoffelimination aus Rohwasser mit autotropher Nitrifikation und anschließender Denitrifikation.

Im Rahmen der vorliegenden Erfindung wird somit insbesondere ein Verfahren zur biologischen Stickstoffelimination in kommunalen und industriellen Abwässern oder in stickstoffhaltigen Grundwässern bereitgestellt.

Die bislang aus dem Stand der Technik bekannten, konventionellen biologischen Reinigungsverfahren zur Stickstoffelimination sind nicht oder allenfalls selten geeignet, um die geforderten Grenzwerte hinsichtlich des Gesamtstickstoffgehalts bzw. der Reduzierung des Gesamtstickstoffs gemäß EU-Wasserrahmenrichtlinie zu erreichen. Dies bezieht sich sowohl auf die biologische Stickstoffelimination in kommunalen und industriellen Abwässern, als auch auf die Entfernung von Stickstoffverbindungen aus Grundwässern, die zur Trinkwassergewinnung genutzt werden.

Im Stand der Technik ist ein Verfahren zur Stickstoffelimination beispielsweise unter der Bezeichnung "Lentikat's" bekannt. Bei diesem Verfahren werden zur Immobilisierung von Enzymen oder ganzen Mikroorganismuszellen poröse Polyvinylträger verwendet. Dabei wird die autotrophe Nitrifikation mit einer heterotrophen Denitrifikation kombiniert. Diese Technik wird beschränkt zur Stickstoffelimination bei der Reinigung von Industrieabwässerteilströmen mit hohen Ammoniumkonzentrationen eingesetzt. Wenn jedoch die Kapazität des zur Durchführung dieses Verfahrens dienenden Reaktors erschöpft ist, muss die Reaktorfüllung durch regenerierte, mit Mikroorganismen besiedelte Polyvinylträger ersetzt werden, was im Hinblick auf die Verfahrensökonomie nachteilig ist.

Weiterhin ist unter dem Begriff "Anammox" (Anaerobe Ammonium-Oxidation) ein Verfahren bekannt, bei dem die Stickstoffelimination in zwei Schritten verläuft. Dabei oxidieren in einem ersten Schritt Ammonium-oxidierende Bakterien Ammoniumionen mit Sauerstoff zu Nitrat bzw. Nitritionen. Anschließend werden noch vorhandene Ammoniumionen durch Anammox-Bakterien in anoxischem Milieu unter Verwendung des vorher im aeroben Milieu gebildeten Nitrits als Elektronenakzeptor durch autotrophe Denitrifikanten in Stickstoffgas umgewandelt. Durch die Zugabe bzw. Zudosierung von organischen Kohlenstoffverbindungen kann eine heterotrophe Unterstützung der Denitrifikation vorgesehen sein, d. h. der Prozess durch eine heterotrophe Denitrifikation unterstützt werden.

Darüber hinaus bezeichnet man als "Nereda" Stickstoffeliminationssysteme auf Basis einer Kombination aus aeroben Biofilmen von Nitrosomonas-Kolonien und Anammox-Bakterien, wobei die anaeroben Mikroorganismen in granulärer Form bzw. in Form von Granula vorliegen. Bei den Granula bzw. Granulen, die als Trägermaterial für die Mikroorganismen genutzt werden, siedeln sich an der Oberfläche aufgrund der aeroben Milieubedingungen Nitrifikanten an, während sich im Inneren unter anoxischen bzw. anaeroben Bedingungen Phytoplankton mit darin enthaltenen Mikroorganismen, insbesondere Actinomyceten, bildet, welche wiederum im aeroben Bereich durch Oxidation von Ammonium gebildetes Nitrit zu Stickstoffgas veratmen. Diese Technologie ist als Ergänzung bei der Ertüchtigung von herkömmlichen Stickstoffeliminationssystemen gedacht. Bei der Anwendung von granulierter Biomasse als Träger für Biofilme und Nitrifizierer, wie Bakterien der Gattung *Nitrosomonas,* muss jedoch aus biologischer Sicht ein Wachstum von heterotrophen Mikroorganismen an der Oberfläche möglichst ausgeschlossen werden, weil heterotrophe Mikroorganismen durch ihr wesentlich schnelleres Wachstum die autotrophen und demzufolge langsamer wachsenden Nitrifizierer überwuchern und damit die Aktivität der Nitrifizierer negativ beeinflussen. Die bislang bekannten Maßnahmen zur Verbesserung der diesbezüglichen Verfahrensführung bzw. zum Ausschluss des Wachstums von heterotrophen Mikroorganismen sind bislang nicht zufriedenstellend. US 2012/152832 offenbart ein Verfahren und ein System zur biologischen Stickstoffelimination aus Rohwasser mit autotropher Nitrifikation und anschließender Denitrifikation. WO 2007/077298 offenbart einen Bioreaktor der einen Reaktionskörper, auf dem ein Biofilm entsteht, umfasst.

Vor dem Hintergrund der vorherigen Ausführungen liegt der vorliegenden Erfindung die Aufgabe zugrunde, ein Verfahren bzw. eine diesbezüglich geeignete Vorrichtung oder Anlage zur biologischen Stickstoffelimination in kommunalen und industriellen Abwässern oder in stickstoffhaltigen Grundwässern, insbesondere in Rohwassern, zu schaffen, bei dem durch eine gezielte und verbesserte Verfahrensführung die biologische Umsetzung, insbesondere die Stickstoffelimination, deutlich beschleunigt werden kann und geringere Reaktionsvolumina erforderlich sind.

Diese Aufgabe wird im Hinblick auf das Verfahren erfindungsgemäß dadurch gelöst, dass die zu reinigenden Rohwässer durch mindestens drei Reaktionszonen geführt werden, wobei sich die Reaktionszonen in einem Reaktor durch Belüftung bzw. die Zugabe von Oxidationsmitteln ausbilden und wobei die Reaktionszonen eine in Durchströmungsrichtung abnehmende Konzentration an gelöstem Sauerstoff aufweisen, so dass in Bereichen mit hoher Konzentration an gelöstem Sauerstoff Nitrifikation und in Bereichen mit geringer Konzentration bzw. anaeroben Bereichen Denitrifikation stattfindet.

Gegenstand der vorliegenden Erfindung - gemäß einem **ersten** Aspekt der vorliegenden Erfindung - ist somit ein Verfahren zur biologischen Stickstoffelimination aus Rohwasser gemäß Anspruch 1.

Was den Begriff der mittleren Reaktionszone anbelangt, wird im weiteren Verlauf synonym für diese Reaktionszone auch die Bezeichnung zweite Reaktionszone verwendet. Die weitere Reaktionszone wird nachfolgend auch als dritte Reaktionszone bezeichnet.

Unter dem Begriff der Nitrifikation, synonym auch als Nitrifizierung bezeichnet, wird im Rahmen der vorliegenden Erfindung die katalytische Umsetzung von Ammonium bzw. Ammoniak zu Nitrat bzw. Nitrit verstanden. Die Nitrifikation erfolgt im Rahmen der vorliegenden Erfindung durch nitrifizierende Bakterien, synonym auch als Nitrifizierer bzw. Nitrifikanten bezeichnet, wobei dazu Sauerstoff aus der Umgebung, insbesondere gelöster Sauerstoff, erforderlich ist. Die Nitrifikation umfasst zwei Teilschritte, wobei in einem ersten Schritt Ammoniak bzw. Ammonium zu Nitrit bzw. Nitritionen oxidiert wird. Insbesondere kann die erste Reaktion durch Nitritbakterien erfolgen. Dabei handelt es sich vorweigend um Mikroorganismen der Gattungen *Nitrosomonas, Nitrosospira* oder *Nitrosococcus.* Der zweite Schritt der Nitrifikation umfasst die Oxidation von Nitrit zu Nitrat, wobei dieser zweite Schritt üblicherweise von sogenannten Nitratbakterien auf Basis von Mikroorganismen der Gattungen *Nitrobacter, Nitrospira* oder *Nitrococcus* katalysiert wird. Die für die Ammoniumoxidation bzw. Nitritoxidation notwendigen Enzyme als Katalysatoren werden von den beteiligten Mikroorganismen selbst hergestellt bzw. synthetisiert.

Im Rahmen der vorliegenden Erfindung werden darüber hinaus unter dem Begriff der Nitrifizierer, synonym auch als Nitrifikanten oder Salpeterbakterien bezeichnet, Gram-negative aerobe Bakterien verstanden, welche die Nitrifikation katalysieren. Die Nitrifizierer werden zudem in die Gruppe der Ammonium-oxidierenden Bakterien, synonym auch als Nitratbakterien oder Ammoniakoxidierer, und die Gruppe der Nitrit zu Nitrat oxidierenden Bakterien, d. h. die Nitritoxidierer bzw. Nitratbakterien, unterteilt.

Grundsätzlich ist das erfindungsgemäße Verfahren zur Durchführung mit allen dem Fachmann bekannten Nitrifizierern bzw. Nitrifikanten ausführbar.

Unter dem Begriff der Denitrifikation wird im Rahmen der vorliegenden Erfindung die mikrobielle Umwandlung des in Form von Nitrat gebundenen Stickstoffs zu molekularem Stickstoff bzw. Stickstoffgas und Stickoxiden durch Denitrifizierer bzw. Denitrifikanten verstanden. Die Denitrifikation erfolgt im anaeroben Milieu, d. h. unter Abwesenheit von molekularem bzw. gelöstem Sauerstoff. Die Denitrifikation umfasst als ersten Teilabschnitt die Reduktion von Nitrat zu Nitrit, welche durch das Enzym Nitratreduktase katalysiert wird. Weiterhin umfasst die Denitrifikation die Reduktion von Nitrit zu Stickstoffmonooxid, welche durch das Enzym Nitritreduktase katalysiert wird. Darüber hinaus umfasst die Denitrifikation als weiteren Teilschritt die Reduktion von Stickstoffmonooxid zu Distickstoffmonooxid, wobei die Reaktion durch das Enzym Stickstoffmonooxid-Reduktase umgesetzt wird. Durch das Enzym Distickstoffmonooxid-Reduktase wird als letzter Teilschritt die Reduktion von Distickstoffmonooxid zu molekularem Stickstoff bzw. Stickstoffgas katalysiert.

Die Mikroorganismen, welche auf Basis der vorgenannten Enzyme die Denitrifikation ausführen bzw. bewirken, werden als Denitrifizierer bzw. Denitrifikanten bezeichnet. Bei den denitrifizierenden Bakterien bzw. Denitrifizierern handelt es sich um eine Gruppe fakultativ anaerober Bakterien verschiedener Gattungen, welche unter anaeroben Wachstumsbedingungen, d. h. unter Ausschluss von Sauerstoff, Energie durch Denitrifikation gewinnen. Bakterien, welche zur Denitrifikation fähig sind, gehören unter anderem den Gattungen *Agrobacterium, Alcaligenes, Azospirillum, Bacillus, Flavobacterium, Hyphomicrobium, Paracoccus, Pseudomonas, Rhodopseudomonas, Thiobacillus, Thiomicrospira, Streptomyces* oder *Actinomyces.* Die nitrifizierenden Bakterien können eine autotrophe oder heterotrophe Denitrifikation betreiben, wobei im Rahmen des erfindungsgemäßen Verfahrens gemäß einer bevorzugten Ausführungsform denitrifizierende Bakterien mit autotropher Denitrifikation eingesetzt werden.

Zudem werden unter dem Begriff der Oxidationsmittel im Rahmen der vorliegenden Erfindung Stoffe verstanden, welche andere Stoffe oxidieren können und dabei selbst reduziert werden. Insbesondere umfasst der Begriff der Oxidationsmittel erfindungsgemäß Luft, Ozon (O₃), Wasserstoffperoxid (H₂O₂) und molekularen Sauerstoff (O₂).

Ein zentraler Aspekt des erfindungsgemäßen Verfahrens liegt somit darin, durch gezielte Zufuhr und Verteilung von Oxidationsmitteln für die mikrobielle Nitrifikation einerseits und die mikrobielle Denitrifikation andererseits optimale Bedingungen einzustellen, d. h. für die mikrobielle Nitrifikation wird ein sauerstoffreiches Milieu bereitgestellt und für die mikrobielle Denitrifikation wird ein sauerstoffarmes Milieu bereitgestellt.

Anders ausgedrückt führt das erfindungsgemäße Verfahren durch die Zugabe von wenigstens einem gasförmigen bzw. flüssigen Oxidationsmittel in den Reaktor zu einer ersten Reaktionszone, in welcher überwiegend Denitrifizierer zur Durchführung der Nitrifikation angesiedelt sind, und einer weiteren Reaktionszone, in der überwiegend Denitrifizierer zur Durchführung der Denitrifikation angesiedelt sind. Gemäß der Erfindung ist eine zwischen der ersten und der weiteren Reaktionszone angeordnete mittlere Reaktionszone vorgesehen sein, in welcher Nitrifizierer und Denitrifizierer angesiedelt sind, so dass in dieser Reaktionszone Nitrifikation und Denitrifikation gleichzeitig bzw. simultan stattfinden.

In einer durch die Zugabe von geeigneten Oxidationsmitteln (wie etwa H₂O₂) beeinflussten bzw. geregelten Verfahrensführung bilden sich innerhalb des erfindungsgemäß bevorzugt nur einen Reaktors mindestens zwei, vorzugsweise drei oder auch mehr Reaktionszonen, in denen die erforderlichen Reaktionen der Nitrifikation gefolgt von der Denitrifikation erfolgen können.

Ohne räumliche bzw. zeitliche Trennung von nitrifizierenden und denitrifizierenden Mikroorganismen, d. h. durch nitrifizierende und denitrifizierende Mikroorganismen vorzugsweise in einem einzigen Reaktor bzw. in einem Reaktionsraum, bilden diese vor dem Hintergrund der erfindungsgemäßen Verfahrensführung mindestens zwei Reaktionszonen aus, die von dem zu reinigenden Rohwasser, insbesondere Abwasser, nacheinander unter maximaler Elimination von Stickstoff durchströmt werden.

Gemäß der Erfindung werden die zu reinigenden Rohwässer durch die sich ausbildenden Reaktionszonen in einen Reaktor geführt werden. Die drei Zonen werden dabei nacheinander von dem zu reinigenden Rohwasser durchströmt. Die Zonen unterscheiden sich im Wesentlichen durch die unterschiedliche Konzentration an gelöstem Sauerstoff, wobei die Sauerstoffkonzentration insgesamt in Durchströmungsrichtung abnimmt. Die Sauerstoffabnahme erfolgt dabei vorzugsweise stetig bzw. kontinuierlich.

Unter diesen Milieuzonen werden in den drei verschiedenen Reaktionszonen jeweils unterschiedliche Mikroorganismen angesiedelt. Gemäß der vorliegenden Erfindung erfolgt dies in einem gemeinsamen Rotationszylinder-Reaktor. Gleichermaßen, gemäß einer weiteren Ausführungsform der vorliegenden Erfindung, ist es auch möglich, die Reaktionszonen auf getrennte Reaktionen, vorzugsweise in Form von Rotationszylinder-Reaktoren, aufzuteilen. Maßgeblich ist dabei für die Realisierung der einzelnen Zonen, dass die zu reinigenden Rohwässer durch einen getauchten Rotationszylinder-Reaktor, geführt werden. Ein solcher Reaktor ist besonders gut geeignet zur Aufnahme von einem geeigneten Trägermaterial und zur Ausbildung verschiedener Schichten.

Dies vorausgeschickt, werden nachfolgend besonders bevorzugte Ausführungsformen des erfindungsgemäßen Verfahrens beschrieben:
Im Hinblick auf das erfindungsgemäße Verfahren hat es sich als vorteilhaft erwiesen, wenn die Denitrifikation autotroph durchgeführt wird. Eine autotrophe Denitrifikation ist mit verschiedenen Vorteilen im Hinblick auf die Verfahrensökonomie verbunden. Zum einen wird auf Basis einer autotrophen Denitrifikation, insbesondere anstelle einer heterotrophen Denitrifikation, verhindert, dass die schnell wachsenden heterotrophen Mikroorganismen die langsamer wachsenden autotrophen Nitrifizierer überwachsen, was letzten Endes zu einer Einstellung der Nitrifizierung führen würde. Darüber hinaus kann bei Einsatz einer autotrophen Denitrifikation auf den Einsatz von zusätzliche Kosten verursachenden organischen Kohlenstoffquellen verzichtet werden. Auf Basis einer autotrophen Denitrifizierung kann somit die Effizienz der Verfahrensführung, aber gleichzeitig auch die Verfahrensökonomie verbessert werden.

Was darüber hinaus die Auswahl der Mikroorganismen für das erfindungsgemäße Verfahren anbelangt, so ist es gemäß einer bevorzugten Ausführungsform vorgesehen, dass als Nitrifizierer Bakterien der Gattung *Nitrosomonas* und/oder *Nitrobacter,* insbesondere *Nitrosomonas,* eingesetzt werden. Was darüber hinaus die Denitrifizierer anbelangt, so kann es insbesondere vorgesehen sein, dass als Denitrifizierer Bakterien der Gattung *Paracoccus, Thiobacillus, Vogesella, Streptomyces, Actinomyces* und/oder *Flavobacterium* und/oder Bakterien der Ordnung *Actinomycetales* eingesetzt werden. Grundsätzlich ist aber auch der Einsatz weiterer, in der Auflistung nicht genannter Nitrifizierer oder Denitrifizierer möglich, welche dem Fachmann bekannt sind.

Im Hinblick auf die Nitrifikation und Denitrifikation hat es sich zudem als vorteilhaft erwiesen, wenn die Nitrifizierer und/oder Denitrifizierer einen Biofilm in dem Reaktor ausbilden. Insbesondere die Nitrifizierer weisen sessile Eigenschaften bzw. gute Haftungseigenschaften auf, dass sie auf Basis einer Biofilmbildung immobilisiert und fixiert werden können. Darüber hinaus kann es im Rahmen der vorliegenden Erfindung vorgesehen sein, dass die Denitrifizierer in Form von granuliertem Schlamm und/oder Granulen und/oder Pelletschlamm eingesetzt werden.

Gemäß einer weiteren bevorzugten Ausführungsform des erfindungsgemäßen Verfahrens kann es vorgesehen sein, dass das Verfahren in einem Reaktor mit mindestens einem Reaktionskörper durchgeführt wird, wobei der Reaktionskörper ein zum Aufwachsen eines Biofilms geeignetes Trägermaterial aufweist. Gemäß einer erfindungsgemäßen Ausführungsform kann es auch vorgesehen sein, dass der Reaktionskörper durch ein Trägermaterial gebildet wird.

Das erfindungsgemäß eingesetzte Trägermaterial kann auf verschiedene Art und Weise ausgestaltet sein, wie nachfolgend ausgeführt.

Besonders gute Ergebnisse im Hinblick auf die Ausbildung eines Biofilms bzw. eine Immobilisierung der Mikroorganismen, insbesondere der Nitrifizierer, kann darüber hinaus erzielt werden, wenn das Trägermaterial eine glatte Oberfläche, insbesondere eine Oberfläche mit einer Rauheit im Bereich von 0 bis 15 µm, insbesondere im Bereich von 0 bis 8 µm, weiter insbesondere bestimmt gemäß EN ISO 25178 und/oder EN ISO 4287, aufweist.

Darüber hinaus kann es im Hinblick auf das Trägermaterial vorgesehen sein, dass dieses auf Basis von Glas, Ton und/oder Kunststoff ausgebildet ist, insbesondere in Form von zumindest im Wesentlichen sphärischen und/oder perlenförmigen Partikeln und/oder unregelmäßig geformten Partikeln und/oder in Form von Würfeln. Gleichermaßen kann das Trägermaterial eine Gitter- und/oder Netzstruktur aufweisen und/oder aus einem Gitter und/oder einem Netz gebildet werden.

Im Hinblick auf die Beschickung des Reaktors mit Rohwasser kann es im Rahmen des erfindungsgemäßen Verfahrens zudem vorgesehen sein, dass Rohwasser dem Reaktor durch ein Verteilungssystem zugeführt wird, insbesondere wobei das Rohwasser und das Oxidationsmittel im Gleichstrom in den Reaktor eingeleitet werden. Gemäß einer weiteren bevorzugten Ausführungsform kann es auch vorgesehen sein, dass Rohwasser und Oxidationsmittel im Gegenstrom in den Reaktor geführt bzw. geleitet werden.

Was darüber hinaus die Gesamtverfahrensdauer anbelangt, so ist es erfindungsgemäß bevorzugt, wenn das Rohwasser über eine Dauer von 10 bis 30 h, insbesondere bis 25 h, weiter insbesondere von 16 bis 20 h, in den Reaktionszonen verweilt.

Im Hinblick auf die Verfahrenseffizienz sowie die Vitalität der eingesetzten Mikroorganismen ist es zudem vorteilhaft, wenn das erfindungsgemäße Verfahren bei einem pH-Wert im Bereich von 6,5 bis 9, insbesondere im Bereich von 7 bis 8, durchgeführt wird.

Was darüber hinaus das zu reinigende Rohwasser für das erfindungsgemäße Verfahren anbelangt, so kann es vorgesehen sein, dass dieses einen definierten biochemischen Sauerstoffbedarf (BSB) aufweist. Bei dem biochemischen Sauerstoffbedarf handelt es sich um die Maßzahl für die Menge an im Wasser gelösten Sauerstoff, welcher zum mikrobiellen bzw. biologischen Abbau von gelösten organischen Verbindungen im Abwasser benötigt wird. In diesem Zusammenhang gibt der BSB₅ an, welche Menge an Sauerstoff (in mg/l) die Mikroorganismen in einer Wasserprobe im Zeitraum von fünf Tagen bei einer Temperatur von 20 °C verbrauchen, um die im Wasser enthaltenen Inhaltsstoffe aerob abzubauen.

Mit anderen Worten handelt es sich beim biochemischen Sauerstoffbedarf um ein indirektes Maß für die Summe aller biologisch abbaubaren organischen Stoffe im Wasser. Der biochemische Sauerstoffbedarf gibt dabei an, wie viel gelöster Sauerstoff in einer bestimmten Zeit für den biologischen Abbau der organischen Abwasserinhaltsstoffe bzw. Rohwasserinhaltsstoffe benötigt wird. Die Bestimmung des BSB₅ kann insbesondere manometrisch oder respiratorisch erfolgen. Darüber hinaus ist eine Bestimmung mittels Verdünnungsmethode gemäß DIN EN 1899-1 möglich.

Im Rahmen der vorliegenden Erfindung kann es vor diesem Hintergrund vorgesehen sein, dass das Rohwasser zum Zeitpunkt der Zuführung in den Reaktor einen BSB₅ im Bereich von 30 bis 100 mg/l, insbesondere im Bereich von 40 bis 60 mg/l, aufweist.

Darüber hinaus kann es gleichermaßen im Rahmen der vorliegenden Erfindung vorgesehen sein, dass das Rohwasser zum Zeitpunkt der Zuführung in den Reaktor einen definierten chemischen Sauerstoffbedarf aufweist. Bei dem chemischen Sauerstoffbedarf (CSB) handelt es sich um ein Maß für die Summe aller organischen Verbindungen im Wasser. Der CSB kennzeichnet dabei die Menge an Sauerstoff, welche zur Oxidation der gesamten, im Wasser enthaltenen organischen Stoffe verbraucht wird. Der CSB kann insbesondere mit einer photometrischen Messmethode gemäß DIN 15705 oder mittels maßanalytischer Messmethode gemäß DIN 38409-H41 bestimmt werden.

Im Rahmen der vorliegenden Erfindung kann es somit vorgesehen sein, dass das Rohwasser einen CSB im Bereich von 80 bis 150 mg/l, insbesondere im Bereich von 90 bis 110 mg/l, aufweist.

Darüber hinaus kann es vorgesehen sein, dass im Zulauf bzw. zum Zeitpunkt der Zuführung des Rohwassers in den Reaktor der BSB₅ des Rohwassers mindestens 30 %, insbesondere mindestens 40 %, vorzugsweise mindestens 50 %, des CSB des Rohwassers beträgt.

Mit dem erfindungsgemäßen Verfahren kann eine äußerst effiziente Senkung der Gesamtstickstoffkonzentration im Rohwasser erzielt werden, welche vorzugsweise auch die diesbezüglichen Grenzwerte der EU-Wasserrahmenrichtlinie erfüllt.

Insbesondere kann es erfindungsgemäß vorgesehen sein bzw. ist es erfindungsgemäß möglich, dass das Rohwasser zum Zeitpunkt der Zuführung in den Reaktor und/oder zu Beginn des Verfahrens eine Gesamtstickstoffkonzentration im Bereich von 20 bis 100 mg/l, insbesondere im Bereich von 40 bis 60 mg/l, aufweist. Gleichermaßen kann es vorgesehen sein, dass das Rohwasser zum Zeitpunkt des Ablaufs aus dem Reaktor und/oder zum Ende des Verfahrens eine Gesamtstickstoffkonzentration von höchstens 20 mg/l, insbesondere höchstens 10 mg/l, aufweist. Was die erfindungsgemäße Verfahrensführung weiterhin anbelangt, kann es zudem vorgesehen sein, dass als Oxidationsmittel Luft, Luft-Wasser-Gemische, gasförmiger Sauerstoff und/oder Wasserstoffperoxid eingesetzt werden.

Gemäß der Erfindung strömt das gasförmige und/oder flüssige Oxidationsmittel axial entlang der Längsachse des Reaktors in den Reaktor ein und geht radial entlang der Längsachse in die erste Reaktionszone über. Es ist besonders vorteilhaft wenn das Oxidationsmittel über eine Stirnseite des Reaktors benachbart zur ersten Reaktionszonen in den Reaktor einströmt. Dabei werden die Reaktionszonen jeweils entsprechend der Strömungsrichtung der Oxidationsmittel ausgebildet, d. h. im Bereich des Oxidationsmitteleinstroms wird eine erste Reaktionszone gebildet. Entsprechend der abnehmenden Konzentration an gelöstem Sauerstoff bilden sich die übrigen Reaktionszonen mit geringerer Sauerstoffkonzentration aus.

Gemäß einer besonders bevorzugten Ausführungsform des erfindungsgemäßen Verfahrens kann es zudem vorgesehen sein, dass sich durch Einleitung von gasförmigen und/oder flüssigen Oxidationsmitteln ausgehend von der Längsachse des Reaktors eine kegelförmige sauerstoffangereicherte Zone mit in radialer Richtung und, vorzugsweise, in Umfangsrichtung abnehmender Sauerstoffkonzentration ausbildet.

Gemäß einer weiteren erfindungsgemäßen Ausführungsform kann es somit vorgesehen sein, dass die Reaktionszonen konzentrisch um die Längsachse des Reaktors - d. h. entlang des Konzentrationsgefälles in Bezug auf den gelösten Sauerstoff von innen nach außen - ausgebildet werden.

Weiterhin kann es vorgesehen sein, dass das Rohwasser und das Oxidationsmittel durch wenigstens einen sich bewegenden, vorzugsweise um die Längsachse des Reaktors rotierenden, Reaktionskörper hindurchgeleitet werden.

Im Rahmen der vorliegenden Erfindung ist es somit besonders bevorzugt, wenn die zu reinigenden Rohwässer durch eine Verteilerleitung im Zentrum des Reaktors zugeführt werden. Oxidationsmittel und Rohwässer können dabei im Gleichstrom oder aus entgegengesetzten Richtungen bzw. im Gegenstrom entlang der Längsachse des Reaktors und/oder des Reaktionskörpers in das Reaktorinnere geführt werden. Darüber hinaus kann es vorgesehen sein, Oxidationsmittel sowohl im Gleichstrom als auch im Gegenstrom zuzusetzen bzw. zuzuführen. Die Konzentration an gelöstem Sauerstoff nimmt innerhalb des Reaktors dann von innen von vorzugsweise mindestens 2,5 mg/l nach außen auf bis zu 0 mg/l ab. Mit anderen Worten liegt im Rahmen des erfindungsgemäßen Verfahrens im Inneren des Reaktors am Reaktoreintritt ein stark aerobes Milieu vor, welches nach Außen bzw. in Durchströmungsrichtung zunehmend in ein anaerobes bzw. anoxisches Milieu übergeht.

Vom Inneren des Reaktors wird im Rahmen des erfindungsgemäßen Verfahrens in der Durchströmungsrichtung in der ersten Zone eine hohe Konzentration an gelöstem Sauerstoff von mindestens 2,5 mg/l erreicht, um für die erste Verfahrensstufe - d. h. die Nitrifikation von Ammonium - limitierende, optimale Milieubedingungen für Nitrifikanten zu schaffen. Dabei wird Ammonium durch geeignete Mikroorganismen, wie sie zuvor bereits definiert werden, unter Verbrauch von Sauerstoff zu Nitrit bzw. Nitritionen oxidiert. Es handelt es sich dabei um eine obligat-katalytische, autotrophe Reaktion, welche den Mikroorganismen zu mehr als 90 % der für ihre Stoffwechselreaktionen notwendigen Energie liefert und die vor allem mit hoher Reaktionsgeschwindigkeit abläuft. Die erforderlichen Biokatalysatoren, d. h. die diesbezüglichen Enzyme und Fermente, werden von den sessilen Nitrifikanten bzw. Nitrifizierern selbst erzeugt. Insbesondere handelt es sich dabei um Oxidasen. Wie nachfolgend noch im Detail ausgeführt, sind die Nitrifikanten dabei vorzugsweise auf einem Trägermaterial in Form von Kompositschichten fixiert. Die Kompositschichten werden aus übereinanderliegenden Schichten aus Nitrifikantenkolonien gebildet und sind von frei schwebenden Einzelbakterien getrennt.

Erfindungsgemäß kann es in diesem Zusammenhang insbesondere vorgesehen sein, dass die erste Reaktionszone für die Nitrifikation auf aerobe Bedingungen und/oder eine hohe Sauerstoffkonzentration eingestellt wird, insbesondere auf eine Konzentration an gelöstem Sauerstoff von mindestens 2,5 mg/l, bevorzugt mindestens 3,0 mg/l.

In diesem Zusammenhang ist es erfindungsgemäß vorgesehen, dass die für die Nitrifikation von Ammonium erforderlichen sessilen Nitrifikanten auf Trägermaterialien fixiert und damit immobilisiert werden. Wegen der gegenüber anderen Bakterien sehr guten Haftungseigenschaften von sessilen Nitrifizierern, insbesondere Nitrosomonas, sind Trägermaterialien mit glatter Oberfläche zur Trennung von anderen Mikroorganismen und zur Anreicherung von Nitrifikanten auf dem Träger besonders gut geeignet.

Diesbezüglich ist es bevorzugt, wenn die Nitrifizierer in der ersten Reaktionszone an dem Reaktionskörper, insbesondere an dem Trägermaterial, fixiert und/oder immobilisiert sind.

Gemäß einer besonders bevorzugten Ausführungsform der ersten Reaktionszone kann es dabei vorgesehen sein, dass die Nitrifizierer in der ersten Reaktionszone an dem Reaktionskörper, insbesondere dem Trägermaterial, einen Biofilm ausbilden. Gleichermaßen kann es vorgesehen sein, dass die Nitrifizierer in der ersten Reaktionszone sessil auf dem Reaktionskörper, insbesondere auf dem Trägermaterial, aufwachsen. Darüber hinaus kann es in Bezug auf die erste Reaktionszone vorgesehen sein, dass die Nitrifizierer in der ersten Reaktionszone an ein Trägermaterial in Form von Kompositschichten fixiert und/oder immobilisiert werden.

Was die Verweildauer in dieser ersten Reaktionszone zur alleinigen Nitrifizierung anbelangt, so kann es im Rahmen der erfindungsgemäßen Verfahrensführung insbesondere vorgesehen sein, dass das Rohwasser über eine Dauer von 0,1 bis 3 h, insbesondere über eine Dauer von 0,5 bis 2,5 h, weiter insbesondere von 1 bis 2 h, in der ersten Reaktionszone verweilt.

Im Rahmen des erfindungsgemäßen Verfahrens ist es weiterhin vorgesehen, dass eine weitere Reaktionszone mit zumindest im Wesentlichen anaeroben Bedingungen zur Durchführung der Denitrifikation ausgebildet wird. In diesem Zusammenhang hat es sich als besonders vorteilhaft erwiesen, wenn die weitere Reaktionszone auf zumindest im Wesentlichen anaerobe Bedingungen und/oder eine geringe Sauerstoffkonzentration eingestellt wird. Insbesondere kann es in diesem Zusammenhang vorgesehen sein, dass die weitere Reaktionszone auf eine Konzentration an gelöstem Sauerstoff von höchstens 0,5 mg/l, insbesondere weniger als 0,1 mg/l, eingestellt wird.

In dieser weiteren Reaktionszone, welche von dem zu reinigenden Rohwasser als letztes durchströmt wird, soll folglich eine sehr niedrige Konzentration an gelöstem Sauerstoff, vorzugsweise eine Konzentration von 0 mg/l, in vorzugsweise fließendem Übergang erreicht werden. Bei einer derart niedrigen Sauerstoffkonzentration ist keine Nitrifikation mehr möglich, so dass ausschließlich Denitrifikation stattfinden kann. Die Reduktion von Nitrit bzw. Nitrat zu Stickstoff findet dabei in Anwesenheit von Ammonium statt. Ziel ist es dabei, die Gesamtstickstoffkonzentration im Ablauf auf weniger als 1 mg/l zu bringen.

In dieser weiteren bzw. vorzugsweise letzten Reaktionszone wird eine vorzugsweise autotrophe Denitrifikation unter Bildung von molekularem Stickstoff bzw. Stickstoffgas durch Actinomyceten durchgeführt. Dies geschieht in Anwesenheit von Ammoniumionen und Nitritionen. Optimiert wird die Gesamtmenge an eliminiertem Stickstoff in Kombination von oxidierenden und reduzierenden Vorgängen.

In diesem Zusammenhang ist es im Rahmen der vorliegenden Erfindung vorgesehen, dass in dieser weiteren bzw. letzten Reaktionszone die Actinomyceten in Form von Granulen bzw. Pellets in die anaerobe Biomasse integriert werden. Auf diese Weise sind geeignete Mikroorganismen für die Denitrifikation in diese Reaktionszone integriert, ohne dass weitere Schichten, insbesondere Kompositschichten oder Biofilme, gebildet werden müssten.

Im Hinblick auf eine effiziente Senkung des Gesamtstickstoffgehalts in dem zu reinigenden Rohwasser hat es sich als vorteilhaft erwiesen, wenn das Rohwasser über eine Dauer von 0,1 bis 5 h, vorzugsweise von 0,5 bis 3 h, insbesondere über eine Dauer von 1 h, in der weiteren Reaktionszone verweilt.

Gemäß einer besonders bevorzugten Ausführungsform der vorliegenden Erfindung kann es zudem vorgesehen sein, dass im Rahmen des erfindungsgemäßen Verfahrens eine zwischen der ersten und der weiteren Reaktionszone angeordnete mittlere Reaktionszone auf Milieubedingungen für die mikrobielle Nitrifikation und die mikrobielle Denitrifikation eingestellt wird.

Insbesondere kann es in diesem Zusammenhang vorgesehen sein, dass die mittlere Reaktionszone auf eine mittlere Konzentration an gelöstem Sauerstoff eingestellt wird, die kleiner als die mittlere Konzentration an gelöstem Sauerstoff in der ersten Reaktionszone und größer als die mittlere Konzentration an gelöstem Sauerstoff in der weiteren Reaktionszone ist, wobei die Konzentration an gelöstem Sauerstoff in der mittleren Reaktionszone auf mindestens 0,5 bis 2,5 mg/l, vorzugsweise bis 2,0 mg/l, eingestellt wird.

Mit anderen Worten hat ein zentraler Gedanke des erfindungsgemäßen Verfahrens zum Gegenstand, dass das zu reinigende Rohrwasser bzw. Wasser bei Gelöstsauerstoffkonzentrationen zwischen 0,5 mg/l und 2,5 mg/l mit geeigneten Mikroorganismengruppen in Kontakt gebracht wird und unter optimierten Milieubedingungen parallel in den Kompositschichten aerobe sowie anoxische Prozesse, d. h. Nitrifikation und Denitrifikation, ablaufen können.

Die Erfindung sieht hierzu vor, dass die für die Nitrifikation von Ammonium erforderlichen sessilen Nitrifikanten auf Trägermaterialien fixiert und damit immobilisiert werden. Wegen der gegenüber anderen Bakterien sehr guten Haftungseigenschaften von sessilen Nitrifikanten, z. B. Nitrosomonas, sind Trägermaterialien mit glatter Oberfläche, wie sie zuvor beschrieben wurden, zur Trennung von anderen Mikroorganismen und zur Anreicherung von Nitrifizierern auf dem Träger besonders gut geeignet.

In der zweiten, mittleren Übergangsreaktionszone ist eine mittlere Konzentration an gelöstem Sauerstoff (z. B. im Bereich von 0,5 mg/l bis 2,5 mg/l) vorgesehen. Dort soll simultan eine autotrophe Nitrifikation und eine vorzugsweise autotrophe Denitrifikation stattfinden. Daher sollen in dieser Reaktionszone sowohl Nitrifizierer und Granulen als auch autotrophe Denitrifizierer (z. B. Nitrosomonas und Actinomyceten) nebeneinander existieren und wachsen.

Unter diesen Milieubedingungen sollen Ammoniumionen und autotroph bei der Nitrifikation gebildete Nitritionen zu elementarem Stickstoffgas umgesetzt werden. Dazu bilden die geeigneten Mikroorganismen ebenfalls Biokatalysatoren (Nitritreduktase). Bei dieser Reaktion dient das Nitrition als Elektronenakzeptor. Während bei höheren Sauerstoffkonzentrationen die Ammoniumoxidase für die Nitrifikation aktiviert wird, wird unter niedrigen Sauerstoffkonzentrationen bzw. anoxischen sauerstofffreien Bedingungen die Nitritreduktase aktiv, so dass mit sinkenden Sauerstoffkonzentrationen die Aktivität der autotrophen Denitrifizierer erhöht wird. Diese ermöglichen bei fehlendem gelösten Sauerstoff den anaeroben autotrophen Ammoniumoxidationsprozess, wobei das bei der Nitrifikation gebildete Nitrit als Elektronenakzeptor dient und die Stickstofffracht als Stickstoffgas aus dem System ausgeschleust wird.

Im Rahmen der vorliegenden Erfindung wird somit gemeinsames Wachstum der beiden unterschiedlichen Mikroorganismen innerhalb eines Reaktors, insbesondere innerhalb einer Reaktionszone, ermöglicht. Die Stickstoffelimination beruht auf katalytischer Energiegewinnung durch aerobe Ammoniumoxidase und anoxische Nitritreduktase. Um daraus eine Stickstoffelimination erreichen zu können, muss zwischen der Ammoniumoxidation und der Nitritreduktion ein Gleichgewicht herrschen. Die organischen Katalysatoren (Enzyme und Fermente) werden je nach Milieubedingungen von den Mikroorganismen selbst synthetisiert. Es reicht jedoch nicht aus, die Biokatalysatoren zu produzieren, sondern sie müssen auch aktiviert werden. Die Aktivierung der Ammoniumoxidase erfolgt durch freien gelösten Sauerstoff unter aeroben Bedingungen, während die Nitritreduktase nur bei Anwesenheit von gelöstem freien Sauerstoff unter anoxischen Bedingungen aktiviert wird.

Im Hinblick auf eine effiziente Senkung der Gesamtstickstoffkonzentration im Rohwasser bzw. im zu reinigenden Abwasser kann es vorgesehen sein bzw. ist es erfindungsgemäß bevorzugt, wenn das Rohwasser über eine Dauer von 5 bis 20 h, insbesondere 10 bis 15 h, in der mittleren Reaktionszone verweilt.

Wie zuvor bereits ausgeführt, ist es gemäß dieser Ausführungsform des erfindungsgemäßen Verfahrens vorgesehen, dass in der mittleren Reaktionszone autotrophe Nitrifikation und vorzugsweise autotrophe Denitrifikation gleichzeitig durchgeführt werden und/oder erfolgen bzw. dass in der zweiten Reaktionszone autotrophe Nitrifikation und vorzugsweise autotrophe Denitrifikation ohne räumliche Trennung erfolgen.

In diesem Zusammenhang kann es insbesondere vorgesehen sein, dass in der mittleren Reaktionszone Nitrifizierer und Denitrifizierer an dem Reaktionskörper, insbesondere an dem in einem Reaktionskörper vorliegenden Trägermaterial, fixiert und/oder immobilisiert sind.

Gemäß einer weiteren, gleichermaßen bevorzugten Ausführungsform kann es auch vorgesehen sein, dass in der mittleren Reaktionszone Denitrifizierer in Form von granuliertem Schlamm und/oder Granulen und/oder Pelletschlamm eingesetzt werden. Im Hinblick auf die Stabilität des granulierten Schlamms bzw. des Pelletschlamms hat es sich als vorteilhaft erwiesen, das Verfahren mit dem zuvor bereits definierten pH-Wert durchzuführen.

Um die Nitrifikation einerseits und die Denitrifikation andererseits in der mittleren Reaktionszone zu optimieren, kann es auch vorgesehen sein, dass die Nitrifizierer und Denitrifizierer in der mittleren Reaktionszone einen Biofilm ausbilden, wobei die Nitrifizierer die Denitrifizierer in dem Biofilm derart überwachsen, dass für die Denitrifizierer ein anaerobes Milieu resultiert und/oder die Denitrifizierer durch die Nitrifizierer zumindest im Wesentlichen vor gelöstem Sauerstoff abgeschirmt werden. Auf dieser Basis kann eine Aktivierung der Enzyme für die Nitrifizierung durch gelösten Sauerstoff und darüber hinaus eine Aktivierung der denitrifizierenden Enzyme erfolgen.

Vor dem Hintergrund der vorherigen Ausführungen kann es somit insbesondere im Hinblick auf die mittlere Reaktionszone vorgesehen sein, dass gemäß einer ersten Ausführungsform die Nitrifizierer und Denitrifizierer, z. B. *Nitrosomonas* und Para*coccus,* in der mittleren Reaktionszone einen gemeinsamen Biofilm bzw. Kompositschichten ausbilden, wobei der Biofilm vorzugsweise derart gebildet wird, dass die Denitrifizierer durch die Nitrifizierer vor gelöstem Sauerstoff abgeschirmt werden und für beide Mikroorganismengruppen optimale Bedingungen im Hinblick auf die Nitrifikation einerseits und Denitrifikation andererseits geschaffen werden.

Gleichermaßen kann es gemäß einer weiteren bevorzugten Ausführungsform vorgesehen sein, dass in der mittleren Reaktionszone die Nitrifizierer und Denitrifizierer einen Biofilm ausbilden und darüber hinaus Denitrifizierer in Form von granuliertem Schlamm bzw. Pelletschlamm in der mittleren Reaktionszone vorliegen. Auch auf dieser Basis können sowohl Nitrifikation als auch Denitrifikation in effizienter Weise ablaufen, so dass es zu der gewünschten Senkung des Gesamtstickstoffgehalts in dem Rohwasser kommt.

Gemäß einer dritten und gleichermaßen bevorzugten Ausführungsform kann es schließlich vorgesehen sein, dass in der mittleren Reaktionszone die Nitrifizierer in einem auf einem Reaktionskörper des Reaktors aufgewachsenen Biofilm vorliegen, während die Denitrifizierer ausschließlich in granuliertem Schlamm bzw. Pelletschlamm vorliegen.

Die Ausführung des erfindungsgemäßen Verfahrens erfolgt in einem Rotationszylinder-Reaktor, wie er nachfolgend noch beschrieben wird.

Die Ausführung der Erfindung besteht folglich aus einem ein-, zwei-, drei- oder mehrteiligen bzw. ein-, zwei-, drei- oder mehr als drei räumlich voneinander getrennte Behälter aufweisenden Rotationsreaktor, der einen um eine horizontale Achse rotierenden Rotationszylinder als Reaktionskörper mit einem perforierten Rohr zur Ausübung der Belüftung und Abwasserzuführung aufweist. Gemäß der Erfindung sind drei Zonen in einem Behälter realisiert. Alternativ können mehrere Zonen auch in voneinander getrennten Behältern ausgebildet werden.

Der Reaktor kann als zusätzliche Verfahrensstufe einer Kläranlage dienen und ermöglicht eine besonders optimale Realisierung der einzelnen Reaktionszonen. Über die Drehzahl des Reaktionskörpers wird der Sauerstoffeintrag in Verbindung mit der Belüftung oder einer anderen Sauerstoffquelle, wie z. B. Wasserstoffperoxid, bedarfsabhängig geregelt. Durch die Drehzahl werden außerdem der Rhythmus der aeroben Milieubedingungen (Nitrifikation) bzw. anoxischen Milieubedingungen (Denitrifikation) im Reaktorinnenraum sowie die Pausenzeiten nach Bedarf geregelt.

Zur Prozesskontrolle kann an verschiedenen Stellen im Reaktor die Sauerstoffkonzentration gemessen und danach über ein Regelsystem das Verhältnis zwischen aerobem und anoxischem Milieu dem aktuellen Bedarf angepasst werden.

Im aeroben Bereich können an und/oder in dem Reaktionskörper geeignete Trägerkörper mit glatter Oberfläche als Träger für Nitrifikanten positioniert werden.

Eine Fluidisierung des Trägerkörpers ist nicht erforderlich, da die für eine hohe Reaktionsgeschwindigkeit erforderliche Grenzschichterneuerung auf den Biofilmen durch die Drehung des Reaktionskörpers gewährleistet wird und durch eine Drehzahlregelung des Reaktionskörpers beeinflusst werden kann.

Die im granulierten Schlamm befindlichen und für die Denitrifikation notwendigen Mikroorganismen (z. B. Actinomyceten) werden im anoxischen Bereich des Reaktors installiert. Die Biomassegranulen können mit spezifisch leichtem Trägermaterial mit glatter Oberfläche gemischt werden. Dadurch wird es für die Actinomyceten möglich, sich außerhalb der Granulen auf der Oberfläche des zugemischten Trägermaterials anzusiedeln. Diese an der Oberfläche angesiedelten Actinomyceten können bis zu 70 % der für die autotrophe Denitrifikation aktiven Denitrifizierer ausmachen. Die erforderlichen Sauerstoffkonzentrationen werden über die Drehzahl des Reaktionskörpers geregelt. Darüber hinaus ist es im Rahmen des erfindungsgemäßen Verfahrens möglich, dass die anaerobe bzw. anoxische Reaktionszone ausschließlich granulierten Schlamm mit Denitrifizierem aufweist.

Weiterhin kann es vorgesehen sein, dass der Rotationszylinder-Reaktor eine Zuführung für Luft oder Sauerstoff bzw. eine Zuführung für Oxidationsmittel, z. B. H₂O₂, Luft oder molekularen Sauerstoff aufweist. Eine als Zuführung für Luft oder Sauerstoff dienende Leitung ist dabei getrennt von einer vorzugsweise dem Zulauf zugeordneten Leitung zum Eintrag eines geeigneten Oxidationsmittels, wie z. B. H₂O₂, ausgebildet. Dank einer gezielten Verfahrensführung, gesteuert in erster Linie über die Belüftung oder Zugabe von Oxidationsmitteln, vorzugsweise Sauerstoff und/oder geeigneten Oxidationsmitteln, wie H₂O₂, können die notwendigen Wechsel von aeroben und anoxischen Milieubedingungen in Abhängigkeit von schwankenden Stickstoffbelastungen und Temperaturänderungen durch die Regelung der Drehzahl des Reaktionskörpers im Reaktor sehr gut angepasst werden. Dieser zyklische Wechsel ist obligat für die autotrophe Denitrifikation. Die Zykluszeiten sind nicht konstant. Zur Steuerung dient die kontinuierliche Messung der Gelöstsauerstoffkonzentration.

Vor diesem Hintergrund ist Gegenstand der vorliegenden Erfindung - gemäß einem **zweiten** Aspekt der vorliegenden Erfindung - ein Reaktor zur biologischen Stickstoffelimination aus Rohwasser gemäß Anspruch 10.

Mit anderen Worten ist Gegenstand der vorliegenden Erfindung ein zur biologischen Stickstoffelimination aus Rohwasser eingestellter bzw. mit den dafür erforderlichen Mikroorganismen besiedelter Reaktor, welcher mindestens eine Reaktionszone für Nitrifizierer, d. h. Milieubedingungen für die Aktivierung der Nitrifikation und einen entsprechenden Bewuchs bzw. eine Besiedelung der Reaktionszone mit Nitrifizierern, und weiterhin mindestens eine Reaktionszone für die Denitrifikation, d. h. anaerobe Milieubedingungen für die Aktivierung der Denitrifikation und eine Besiedelung der Reaktionszone mit entsprechenden Denitrifizierern, aufweist. Darüber hinaus kann der Reaktor gegebenenfalls mindestens eine Übergangszone bzw. Reaktionszone, in welcher Nitrifikation und Denitrifikation gemeinsam ablaufen und welche entsprechende Milieubedingungen und einen Bewuchs sowohl mit Nitrifizierern als auch Denitrifizierern aufweist, aufweisen.

Was den technischen Einsatz des Reaktors nach der vorliegenden Erfindung anbelangt, kann es insbesondere vorgesehen sein, dass der Reaktor eine separate Verfahrensstufe, insbesondere eine Verfahrensstufe zur Stickstoffelimination, einer Rohwasseraufbereitungsanlage ausbildet.

Um die Besiedelung bzw. den Bewuchs des Reaktors mit den für die Rohwasserreinigung bzw. Stickstoffelimination erforderlichen Mikroorganismen weiterführend zu verbessern, kann es vorgesehen sein, dass der Reaktionskörper mindestens ein für den Bewuchs mit Nitrifizierern und/oder die Ausbildung eines Biofilms mit Nitrifizierern geeignetes Trägermaterial aufweist und/oder im Bereich des Reaktionskörpers ein entsprechendes Trägermaterial immobilisiert ist. Der Reaktionskörper kann auch selbst aus einem geeigneten Trägermaterial bestehen. Dabei ist es insbesondere vorgesehen, dass das Trägermaterial eine glatte Oberfläche, insbesondere eine Oberfläche mit einer Rauheit im Bereich von 0 bis 15 µm, insbesondere im Bereich von 0 bis 8 µm, aufweist, insbesondere bestimmt gemäß EN ISO 25178 und/oder EN ISO 4287. Eine glatte Oberfläche, wie sie zuvor definiert wurde, ist insbesondere für die Haftungseigenschaften der Nitrifizierer vorteilhaft.

Der Bewuchs bzw. die Besiedelung des Reaktors mit Mikroorganismen kann darüber hinaus weiterführend verbessert werden, wenn das Trägermaterial auf Basis von Glas, Ton und/oder Kunststoff ausgebildet ist. Insbesondere kann es vorgesehen sein, dass das Trägermaterial in Form von zumindest im Wesentlichen sphärischen und/oder perlenförmigen Partikeln und/oder unregelmäßig geformten Partikeln und/oder in Form von Würfeln ausgebildet ist. Gemäß einer gleichermaßen bevorzugten Ausführungsform des erfindungsgemäßen Reaktors kann es zudem vorgesehen sein, dass das Trägermaterial eine Gitter- und/oder Netzstruktur aufweist und/oder aus einem Gitter und/oder einem Netz gebildet wird.

Im Rahmen der vorliegenden Erfindung hat es sich als besonders vorteilhaft erwiesen, wenn als Trägermaterial für die Mikroorganismen zur Stickstoffelimination, insbesondere die Nitrifizierer, ein Trägermaterial auf Basis von Glaskugeln oder Glasperlen eingesetzt wird. In diesem Zusammenhang kann es auch vorgesehen sein, dass das Trägermaterial auf Basis von Glasperlen in ein Netz- bzw. Gitterwerk eingebracht wird, das den Reaktionskörper bildet. Der Reaktionskörper kann durch eine spiralförmig gewickelte Bahn aus einem Netz- oder Gittermaterial gebildet sein. Dabei wird das Trägermaterial durch die spiralförmig gewickelten Bahnen des Reaktionskörpers fixiert und es lassen sich in einfacher Weise die Menge und/oder die Zusammensetzung des Trägermaterials in radialer Richtung des Reaktionskörpers ändern und an den gewünschten Bedarf anpassen.

Mit anderen Worten werden durch einen Reaktionskörper, welcher eine Netz- oder Gitterstruktur, insbesondere durch ein spiralförmig um die Drehachse gewickeltes Netz- oder Gitterwerk, Aufnahmebereiche für die Nitrifizierer und/oder Denitrifizierer gebildet, wobei die Aufnahmebereiche dabei mit den Reaktionszonen korrelieren. Gemäß dieser Ausführungsform weist der Reaktionskörper dabei mindestens einen ersten, vorzugsweise radial innenliegenden Aufnahmebereich für Nitrifizierer auf, welcher gleichzeitig durch eine geeignete Zufuhr des Oxidationsmittels auf Milieubedingungen für die Nitrifikation eingestellt ist. Darüber hinaus weist der Reaktionskörper wenigstens einen weiteren Aufnahmebereich auf, welcher auf anaerobe Milieubedingungen für die Denitrifikation eingestellt ist und Denitrifizierer aufweist. Darüber hinaus kann es vorgesehen sein, dass wenigstens ein weiterer Aufnahmebereich vorliegt, welcher auf Milieubedingungen für die gleichzeitige Nitrifikation und Denitrifikation aufweist und welcher mit Denitrifizierern und Nitrifizierern besiedelt ist.

Darüber hinaus kann es im Rahmen der vorliegenden Erfindung vorgesehen sein, dass der Reaktionskörper eine Netz- oder Gitterstruktur aufweist, durch die wenigstens ein Aufnahmebereich für Trägermaterial für die Nitrifizierer und/oder granulierten Schlamm für die Denitrifizierer geschaffen wird, wobei, vorzugsweise, der Reaktionskörper durch ein spiralförmig um die Drehachse gewickeltes Netz- oder Gitterwerk gebildet wird.

Gemäß einer weiteren Ausführungsform kann es auch vorgesehen sein, dass der Reaktionskörper mindestens einen flächigen Biofilmträger aufweist bzw. aus diesem gebildet ist. Ein flächiger Träger kann plattenförmig ausgestaltet sein und/oder eine Gitterstruktur aufweisen. Insbesondere ist es in diesem Zusammenhang bevorzugt, wenn der Reaktionskörper mehrere, vorzugsweise sternförmig angeordnete Träger bzw. Trägerarme auf Basis des zuvor beschriebenen Trägermaterials bzw. Biofilmträgers zur Besiedelung mit den Mikroorganismen, insbesondere den Nitrifizierern, aufweist.

Im Hinblick auf die Besiedelung bzw. den Bewuchs des Reaktionskörpers und/oder des Trägermaterials mit den Mikroorganismen kann es im Rahmen der vorliegenden Erfindung auch vorgesehen sein, dass Nitrifizierer und Denitrifizierer gleichzeitig auf dem Trägermaterial fixiert werden und parallel in Kompositschichten wachsen können. Es kann aber auch vorgesehen sein, dass lediglich überwiegend Nitrifizierer auf dem Trägermaterial fixiert bzw. immobilisiert sind.

Darüber hinaus kann es vorgesehen sein, dass im Reaktor ein Denitrifizierer aufweisender Biofilm und/oder ein Denitrifizierer aufweisender granulierter Schlamm und/oder Pelletschlamm vorliegt. Der Einsatz von Denitrifizierern in Form von granuliertem Schlamm bzw. Pelletschlamm ermöglicht, dass die Denitrifizierer, insbesondere Actinomyceten, in Form von Granulaten in die anaerobe Biomasse integriert werden können, so dass die Mikroorganismen integriert sind, ohne dass Schichten gebildet werden müssen.

Im Zusammenhang mit der Besiedelung des Reaktors durch Nitrifikation betreibende Mikroorganismen hat es sich als vorteilhaft erwiesen, wenn das Trägermaterial für die Nitrifizierer in mehreren im Wesentlichen konzentrisch zur Drehachse des Reaktionskörpers angeordneten und vorzugsweise in radialer Richtung voneinander getrennten Aufnahmebereichen immobilisiert ist. Erfindungsgemäß kann z. B. ein Reaktionskörper auf Basis eines um die Drehachse gewickelten Netz- oder Gitterwerks mehrere Aufnahmebereiche ausbilden, die mit einem oder mehreren Trägermaterialien für Nitrifizierer befüllt sind, wobei sich Menge und Zusammensetzung des oder der Trägermaterialien in den Aufnahmebereichen in radialer Richtung des Reaktionskörpers ändern können. Mit anderen Worten ausgedrückt weisen benachbarte Aufnahmebereiche dann eine unterschiedliche Menge des Trägermaterials und/oder eine Befüllung mit unterschiedlichen Trägermaterialien auf.

Gleichermaßen kann es im Rahmen der vorliegenden Erfindung vorgesehen sein, dass in einem radial innenliegenden inneren Aufnahmebereich vorzugsweise ausschließlich Trägermaterial für Nitrifizierer immobilisiert ist, wobei, weiter vorzugsweise, die Menge des Trägermaterials vorzugsweise stufenförmig von einem weiter innenliegenden Aufnahmebereich zu wenigstens einem benachbarten weiter außenliegenden Aufnahmebereich abnimmt. Die Menge des immobilisierten Trägermaterials kann dabei in radialer Richtung des Reaktionskörpers nach außen abnehmen.

Im Rahmen der vorliegenden Erfindung kann es auch vorgesehen sein, dass in wenigstens einem Aufnahmebereich des Reaktionskörpers ein Denitrifizierer aufweisender Schlamm vorgesehen ist, wobei in einem radial außenliegenden äußeren Aufnahmebereich vorzugsweise ausschließlich Schlamm immobilisiert sein kann und/oder wobei die Menge des immobilisierten Schlamms in radialer Richtung von dem radial außenliegenden äußeren Aufnahmebereich nach innen zu wenigstens einem benachbarten nachfolgenden Aufnahmebereich abnimmt. Dabei kann es vorgesehen sein, dass ein Aufnahmebereich durch mehrere Teilbereiche gebildet wird.

Gemäß einer besonders bevorzugten Ausführungsform der vorliegenden Erfindung kann es somit vorgesehen sein, dass der Reaktionskörper in einem innenliegenden Aufnahmebereich, entsprechend einer ersten Reaktionszone, in welcher die Nitrifikation stattfindet, im Wesentlichen vollständig mit einem Trägermaterial, vorzugsweise auf Basis von Glasperlen oder Glaskugeln, gefüllt ist, welche einen Biofilm bzw. Kompositschichten auf Basis von Nitrifizierern aufweisen. In einem vorzugsweise in zwei oder mehrere radiale Teilbereiche unterteilten mittleren Aufnahmebereich, welcher auf Milieubedingungen sowohl für die Nitrifikation als auch für die Denitrifikation eingestellt ist, kann in dem benachbart zu dem innenliegenden Aufnahmebereich angeordneten Teilbereich des mittleren Aufnahmebereichs Trägermaterial auf Basis von Glasperlen bzw. Glaskugeln, welche einen Biofilm auf Basis von Nitrifizierern aufweisen, mit einem Anteil von beispielsweise ungefähr 50 %, bezogen auf die Aufnahmekapazität (das freie Volumen) des Teilbereichs, vorliegen. Darüber hinaus kann dieser Teilbereich zu weiteren ca. 50 %, bezogen auf die Aufnahmekapazität des Teilbereichs, mit anaerobem Pelletschaum bzw. granuliertem Schlamm gefüllt sein. In einem weiteren, ebenfalls die mittlere Reaktionszone ausbildenden und radial außenliegenden Teilbereich, welcher nach außen an die weitere, anaerobe Reaktionszone angrenzt, können bis zu 75 %, bezogen auf die Aufnahmekapazität (das freie Volumen) des Teilbereichs, anaerober Pelletschlamm bzw. granulierter Schlamm mit Denitrifizierern vorliegen. Darüber hinaus kann dieser Teilbereich des mittleren Aufnahmebereichs bis zu 25 %, bezogen auf die Aufnahmekapazität (das freie Volumen) des Teilbereichs, Trägermaterial, insbesondere auf Basis von Glasperlen, aufweisen, welches mit Nitrifizierern bewachsen ist. In einem äußeren bzw. radial außen liegenden Aufnahmebereich, welcher der weiteren bzw. anaeroben Reaktionszone entspricht, kann der Reaktionskörper vorzugsweise zu 100 %, bezogen auf die Aufnahmekapazität (das freie Volumen) des Aufnahmebereichs, mit anaerobem Schlamm bzw. Pelletschlamm oder granuliertem Schlamm auf Basis von Denitrifizierern gefüllt sein.

Was darüber hinaus die Form des Reaktionskörpers anbelangt, ist es vorgesehen, dass der Reaktionskörper eine zylindrische Form aufweist. Gleichermaßen kann der Reaktionskörper eine rechteckige, flächige Form aufweisen und/oder aber ein Rahmen zur Aufnahme eines Trägermaterials, insbesondere Biofilmträgers, sein.

Anders ausgedrückt, ist es erfindungsgemäß vorgesehen, dass der Reaktionskörper durch einen Hohlkörper in Form eines Zylinders gebildet wird, welcher vorzugsweise Aufnahmebereiche für ein Trägermaterial und/oder Pelletschlamm und/oder granulierten Schlamm aufweist. Gemäß einer zweiten, gleichermaßen bevorzugten Ausführungsform kann es auch vorgesehen sein, dass der Reaktionskörper als insbesondere plattenförmiger Biofilmträger bzw. als Rahmen zur Aufnahme eines Biofilmträgers ausgebildet ist.

Darüber hinaus ist es erfindungsgemäß vorgesehen, dass der Reaktor eine Zuführung für flüssige und/oder gasförmige Oxidationsmittel, insbesondere Luft oder Sauerstoff oder Wasserstoffperoxid, aufweist.

Der Reaktionskörper ist als um eine horizontale Achse rotierender Rotationszylinder mit einem perforierten Rohr zur Zufuhr von flüssigen und/oder gasförmigen Oxidationsmitteln und Rohwasser ausgebildet.

Um die Milieubedingungen für die Nitrifikation und Denitrifikation weiterführend zu verbessern, hat es sich zudem als vorteilhaft erwiesen, wenn für den erfindungsgemäßen Reaktor eine Drehzahlsteuerung- und/oder Regelung des Reaktionskörpers zur Einstellung der Milieubedingungen, insbesondere der Sauerstoffkonzentration in den Reaktionszonen, vorzugsweise zur Einstellung aerober Milieubedingungen zur überwiegenden Nitrifikation und anaerober Milieubedingungen zur überwiegenden Denitrifikation in unterschiedlichen Reaktionszonen, vorgesehen ist.

Um darüber hinaus die Milieubedingungen zu überprüfen und gegebenenfalls einstellen zu können bzw. verändern zu können, ist erfindungsgemäß wenigstens eine Messeinrichtung zur Messung der Sauerstoffkonzentration von wenigstens einer Reaktionszone vorgesehen.

Darüber hinaus ist der Reaktor ausgebildet zur Durchführung eines erfindungsgemäßen Verfahrens, wie es zuvor beschrieben wurde.

Im Hinblick auf den erfindungsgemäßen Reaktor gilt zudem, dass sämtliche Merkmale, welche lediglich im Hinblick auf das erfindungsgemäße Verfahren gemäß dem ersten Erfindungsaspekt beschrieben wurden, selbstverständlich auch für den Gegenstand gemäß dem zweiten Erfindungsaspekt entsprechend gelten.

Weitere Einzelheiten und Vorteile des Erfindungsgegenstands ergeben sich aus der nachfolgenden Beschreibung und den zugehörigen Zeichnungen, in denen bevorzugte Ausführungsbeispiele der vorliegenden Erfindung mit den dazu notwendigen Einzelheiten und Einzelteilen dargestellt sind. Es zeigen
- Fig. 1: eine schematische Darstellung eines erfindungsgemäßen Verfahrens zur biologischen Stickstoffelimination aus Rohwasser mit autotropher Nitrifikation und anschließender Denitrifikation, wobei Rohwasser durch vorzugsweise mindestens einen gemeinsamen Reaktor mit drei nachfolgenden Reaktionszonen geleitet wird,
- Fig. 2: eine schematische Darstellung eines erfindungsgemäßen Rotationszylinder-Reaktors in einer Draufsicht mit einem drehbar gelagerten Reaktionskörper auf Basis eines Trägernetzes;
- Fig. 3: den in Fig. 2 gezeigten Rotationszylinder-Reaktor in einer Teilansicht auf die Längsachse des Reaktionskörpers;
- Fig. 4: den in Fig. 2 gezeigten Rotationszylinder-Reaktor in einer Ansicht in Richtung der Längsachse des Reaktionskörpers bei langsamer Rotation des Reaktionskörpers;
- Fig. 5: den in Fig. 2 gezeigten Rotationszylinder-Reaktor in einer Ansicht in Richtung der Längsachse des Reaktionskörpers bei schneller Rotation des Reaktionskörpers;
- Fig. 6: eine schematische Darstellung einer weiteren Ausführungsform eines erfindungsgemäßen Rotationszylinder-Reaktors in einer Draufsicht mit einem drehbar gelagerten Reaktionskörper auf Basis eines plattenförmigen Biofilmträgers;
- Fig. 7: den in Fig. 6 gezeigten Rotationszylinder-Reaktor in einer Teilansicht auf die Längsachse des Reaktionskörpers;
- Fig. 8: den in Fig. 6 gezeigten Rotationszylinder-Reaktor in einer Ansicht in Richtung der Längsachse des Reaktionskörpers bei langsamer Rotation des Reaktionskörpers und
- Fig. 9: den in Fig. 6 gezeigten Rotationszylinder-Reaktor in einer Ansicht in Richtung der Längsachse des Reaktionskörpers bei schneller Rotation des Reaktionskörpers.

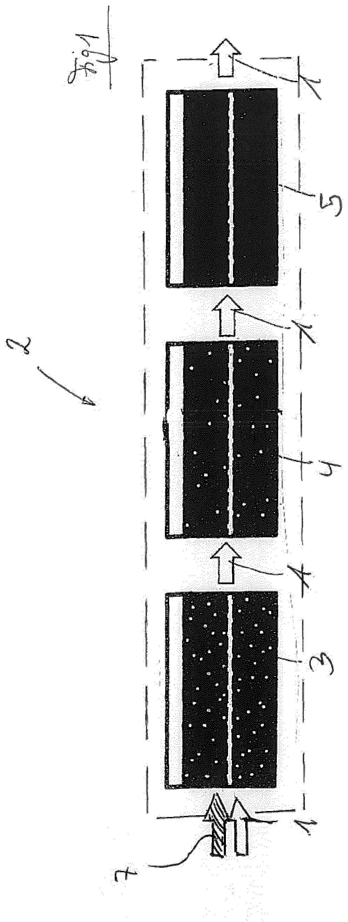

Fig. 1 zeigt schematisch den Verfahrensablauf einer biologischen Stickstoffelimination mit autotropher Nitrifikation und anschließender vorzugsweise autotropher Denitrifikation, wobei ein Rohwasserstrom 1, insbesondere ein industrielles oder kommunales Abwasser, durch vorzugsweise mindestens einen gemeinsamen Reaktor 2 mit beispielsweise drei nachfolgenden Reaktionszonen 3, 4, 5 geleitet wird. Die Reaktionszonen 3, 4, 5 können in einem gemeinsamen Reaktorbehälter 6 vorliegen oder jede Reaktionszone 3, 4, 5 kann in einem separaten Reaktorbehälter des Reaktors 2 ausgebildet sein. Fig. 1 dient insoweit lediglich zur schematischen Darstellung des nachfolgend beschriebenen Verfahrens zur Stickstoffelimination.

Zusätzlich, vorzugsweise zusammen, mit dem Rohwasserstrom 1 wird dem Reaktor 2 ein Oxidationsmittelstrom 7, beispielsweise Luft oder auch Wasserstoffperoxid, zugeführt. Hierdurch kommt es zu einer Sauerstoffanreicherung des Rohwassers im Reaktor 2.

Durch die Zugabe eines gasförmigen und/oder flüssigen Oxidationsmittels in den Reaktor 2 wird eine erste Reaktionszone 3 des Reaktors auf Milieubedingungen für die mikrobielle Nitrifikation, eine nachfolgende mittlere Reaktionszone 4 auf Milieubedingungen für die mikrobielle Nitrifikation und die mikrobielle Denitrifikation und eine nachfolgende dritte Reaktionszone 5 auf Milieubedingungen für die mikrobielle Denitrifikation eingestellt. Die Reaktionszonen 3, 4, 5 sind radial nebeneinanderliegend ausgebildet oder auch, wie in Fig. 1 gezeigt, axial hintereinanderliegend angeordnet bzw. ausgebildet sein. Es versteht sich, dass auch mehr als drei Reaktionszonen vorgesehen sein können.

Oxidationsmittel und Rohwasser können im Gleichstrom in das Reaktorinnere geführt werden. Die Konzentration an gelöstem Sauerstoff nimmt dabei innerhalb des Reaktors 2 über die Reaktionszonen 3, 4, 5 von beispielsweise mindestens 2,5 mg/l in der Reaktionszone 3 auf bis zu 0 mg/l am Austritt aus der Reaktionszone 5 ab. Schematisch erkennbar ist in Fig. 1, wie die Sauerstoffkonzentration von der ersten Reaktionszone 3 über die mittlere Reaktionszone 4 zur letzten Reaktionszone 5 hin stetig abnimmt. In der ersten Reaktionszone 3 liegt dann ein stark aerobes Milieu vor, während in der letzten Reaktionszone 5 ein anaerobes Milieu vorliegt. In der mittleren Reaktionszone 4 liegt der Sauerstoffgehalt vorzugsweise zwischen dem Sauerstoffgehalt der ersten Reaktionszone 3 und dem Sauerstoffgehalt der letzten Reaktionszone 5.

Die Verweilzeit des Rohwassers in der mittleren Reaktionszone 4 liegt deutlich über der Verweilzeit des Rohwassers in der ersten Reaktionszone 3 und in der letzten Reaktionszone 5. Die Verweilzeit des Rohwassers in der mittleren Reaktionszone 4 kann zwischen 5 bis 20 h betragen, vorzugsweise 10 bis 15 h. Die Verweilzeit des Rohwassers in der ersten Reaktionszone 3 kann zwischen 0,1 bis 3 h betragen, vorzugsweise 1 bis 2 h. Die Verweilzeit des Rohwassers in der letzten Reaktionszone 5 kann zwischen 0,1 bis 5 h betragen, vorzugsweise 1 bis 2 h. Insbesondere kann die Verweilzeit in der ersten Reaktionszone 3 und in der letzten Reaktionszone 5 in der gleichen Bandbreite liegen.

Durch den eingestellten Sauerstoffgradienten über die Reaktionszonen 3, 4, 5 des Reaktors 2 und vorzugsweise durch eine vorherige Beimpfung mittels Eintrag von Impfschlamm und ggf. Kulturen gewünschter Nitrifizierer und Denitrifizierer in den Reaktor 2 kommt es zur Besiedlung der ersten Reaktionszone 3 überwiegend mit Nitrifizierern und der letzten Reaktionszone 5 überwiegend mit Denitrifizierern. In der mittleren Reaktionszone 4 liegen vorzugsweise Nitrifizierer und Denitrifizierer gemeinsam vor. Damit wird eine hochwirksame biologische Stickstoffelimination aus dem Rohwasser mit autotropher Nitrifikation und anschließender vorzugsweise autotropher Denitrifikation sichergestellt, wobei aus der letzten Reaktionszone 5 ein vorzugsweise im Wesentlichen ammonium-, nitrit- und nitratfreier Rohwasserstrom 1 den Reaktor 2 verlässt.

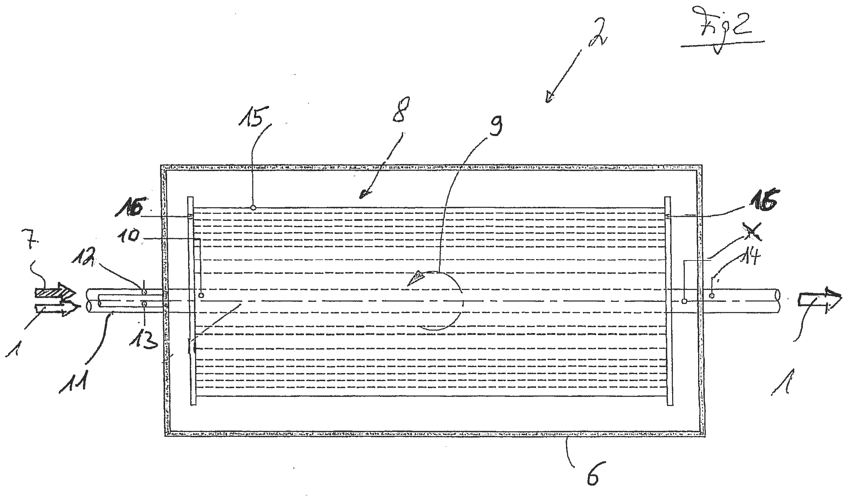

Fig. 2 zeigt einen Reaktor 2 zur biologischen Stickstoffelimination mit autotropher Nitrifikation und anschließender vorzugsweise autotropher Denitrifikation in einer Draufsicht, wobei der Reaktor 2 einen drehbar gelagerten und vorzugsweise zylindrischen Rotationskörper 8 aufweist. Die Drehrichtung des Rotationskörpers 8 um die Drehachse X ist durch einen Pfeil 9 gekennzeichnet. Die Zufuhr des Rohwassers und des Oxidationsmittels erfolgt vorzugsweise im Gleichstrom auf der Seite der ersten Reaktionszone 3 über ein perforiertes Rohr 10, das zur Belüftung dienen kann. Als Oxidationsmittel kann auch Wasserstoffperoxid zugeführt werden. Vorzugsweise erfolgt der Austritt des Rohwassers und/oder des Oxidationsmittels über die gesamte Länge des Rotationskörpers 8, um eine gleichmäßige Ausbildung der Reaktionszonen 3, 4, 5 über die Längserstreckung des Rotationskörpers 8 zu gewährleisten.

Fig. 2 zeigt einen Zulauf 11 für Rohwasser und Oxidationsmittel, wobei Rohwasser und Oxidationsmittel über getrennte Leitungen 12, 13 zugeführt werden. Grundsätzlich könnten Rohwasser und Oxidationsmittel auch über eine gleiche Leitung zugeführt werden. Aus einem Abaluf 14 des Reaktors 2 verlässt ein im Wesentlichen ammonium-, nitrit- und nitratfreier Rohwasserstrom 1 den Reaktor 2.

Über die Drehzahl des Reaktionskörpers 8 wird die Sauerstoffverteilung im Reaktor 2 und damit die Ausbildung unterschiedlicher Reaktionszonen 3, 4, 5 beeinflusst bzw. vorgegeben und es kann die Drehzahl bedarfsabhängig geregelt werden.

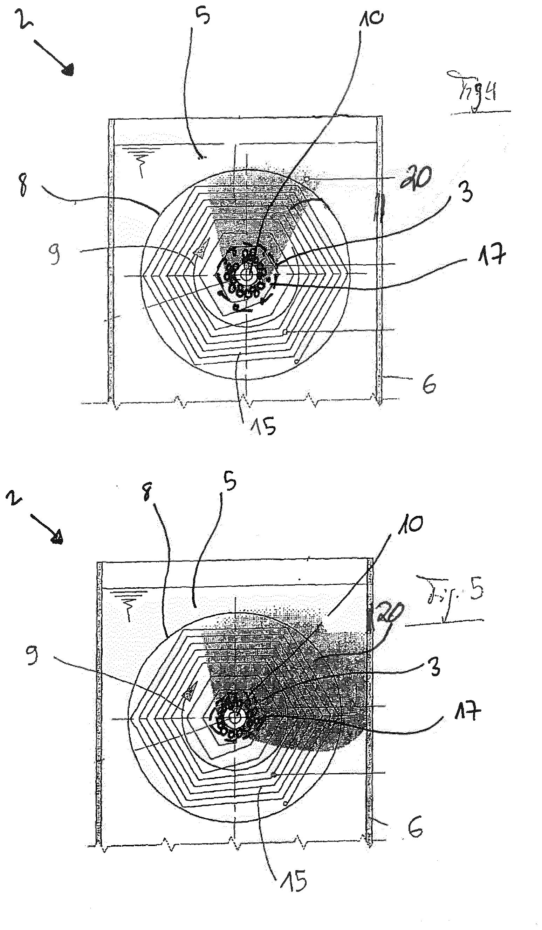

Der Reaktionskörper 8 weist ein spiralförmig aufgewickeltes Netz oder Gittermaterial 15 auf, was in den Fign. 4 und 5 gezeigt ist. Stirnseitig kann der Reaktionskörper 8 durch zwei Lochscheiben 16 begrenzt werden. Die Lochscheiben 16 können zur Fixierung des Netz oder Gittermaterials 15 dienen. Es versteht sich, dass der Reaktorkörper 8 entsprechende nicht gezeigte Haltemittel, wie ein Gestänge, für das Netz oder Gittermaterial 15 aufweisen kann.

Das Netz oder Gittermaterial 15 kann als Biofilmträger dienen. Vorzugsweise ist jedoch vorgesehen, dass zum Aufwachsen der Nitrifizierer ein Trägermaterial 17 innerhalb von einem durch das Netz oder Gittermaterial 15 gebildeten Aufnahmebereich immobilisiert wird. Vorzugsweise liegt das Trägermaterial 17 im radial innenliegenden achsnahen Bereich des Reaktorkörpers 8 vor, wobei Menge und/oder Zusammensetzung des Trägermaterials 17 in radialer Richtung nach außen abnehmen können. Dies ist in Fig. 4 schematisch gezeigt. Vorzugsweise ist der Gesamtaufnahmebereich des Reaktorkörpers 8 in drei oder mehr Teilbereiche unterteilt, wobei in einem radial innenliegenden an das perforierte Rohr 10 angrenzenden Teilbereich lediglich Trägermaterial 17 vorliegt und dann in den angrenzenden Teilbereichen radial nach außen der Anteil des Trägermaterials 17 in den Teilbereichen abnimmt. Gleichzeitig kann in den angrenzenden Teilbereichen auch ergänzend Pelletschlamm oder granulierter Schlamm vorliegen, wobei die Schlammmenge in radialer Richtung nach innen von einem äußerten Teilbereich, in dem vorzugsweise lediglich Schlamm vorliegt, zu einem benachbarten mittleren Teilbereich abnimmt.

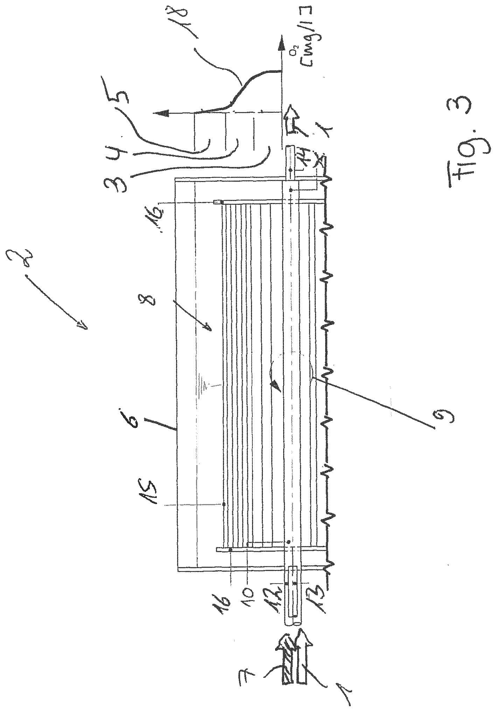

Fig. 3 zeigt schematisch die Abnahme der Sauerstoffkonzentration 18 im Reaktor 2 über den radialen Abstand zu dem perforierten Rohr 10 bzw. zum Ort des Sauerstoffeintrags in das Rohwasser. Erkennbar werden bei dem beschriebenen Reaktor 2 drei radial nachfolgende Reaktionszonen 3, 4, 5 ausgebildet, was durch die Zufuhr und Verteilung des Oxidationsmittels zum bzw. im Rohwasser und durch die Drehzahl des Reaktionskörpers 8 gesteuert wird. Es gelten die oben anhand von

Fig. 1 beschriebenen Ausführungen zur biologischen Stickstoffelimination mit autotropher Nitrifikation und anschließender vorzugsweise autotropher Denitrifikation.

Aus Fig. 3 ist ersichtlich, dass in dem Reaktor 2 eine erste radial innenliegende Reaktionszone 3 für die Nitrifikation ausgebildet ist. Die erste Reaktionszone 3 weist die höchste Konzentration an gelöstem Sauerstoff auf. Erfindungsgemäß ist es besonders bevorzugt, wenn die Konzentration an gelöstem Sauerstoff mindestens und vorzugsweise in radialer Richtung im Wesentlichen konstant 2,0 bis 2,5 mg/l beträgt.

Darüber hinaus weist der Reaktor 2 gemäß Fig. 3 eine mittlere Reaktionszone 4 auf, welche gegenüber der benachbarten, ersten Reaktionszone 3 einen geringeren, insbesondere radial nach außen abnehmenden Gehalt an gelöstem Sauerstoff aufweist. Erfindungsgemäß ist es besonders bevorzugt, wenn der Sauerstoffgehalt in dieser Reaktionszone radial von innen nach außen von 2,5 mg/l gelöstem Sauerstoff auf 0,5 mg/l an gelöstem Sauerstoff abnimmt.

Darüber hinaus weist der in Reaktor 2 gemäß Fig. 3 eine außen liegende weitere bzw. dritte Reaktionszone 5 auf, die sich bis zur Wasseroberfläche des Rohwassers in dem Reaktor 2 erstreckt und welche an die mittlere Reaktionszone 4 angrenzt und den geringsten Sauerstoffgehalt aufweist. Erfindungsgemäß ist es insbesondere vorgesehen, dass in dieser weiteren bzw. dritten Reaktionszone 5 der Sauerstoffgehalt radial nach außen von 0,5 mg/l gelöstem Sauerstoff auf vorzugsweise 0 mg/l gelöstem Sauerstoff absinkt und dann zumindest im äußeren Bereich ein vollkommen anaerobes Milieu vorherrscht.

Die Fign. 4 und 5 zeigen den Einfluss der Drehgeschwindigkeit des Reaktionskörpers 8 auf die Sauerstoffverteilung im Rohwasser. Gemäß Fig. 4 wird bei geringer oder mittlerer Drehzahl ein im Wesentlichen kegelförmiger Sauerstoffeintrag in das Rohwasser erreicht, wobei der eingetragene Sauerstoff durch die Bewegung des Reaktionskörpers 8 nur wenig umgewälzt bzw. mitgenommen wird und im Rohwasser nach oben aufsteigt.

Der Sauerstoffgehalt kann, wie oben beschrieben, in radialer Richtung nach außen abnehmen. Es können sich dann in radialer Richtung die oben beschriebenen Reaktionszonen 3, 4, 5 ausbilden (vgl. Fig. 3), wobei die radial innenliegende erste Reaktionszone 3 die höchste Sauerstoffkonzentration und die davon am Weitesten beabstandete Reaktionszone 5 die niedrigste Sauerstoffkonzentration, vorzugsweise einen Sauerstoffgehalt von 0 mg/l, aufweist. Vorzugsweise bilden sich die Reaktionszonen 3, 4, 5 gleichmäßig über die Längserstreckung des Reaktors 2 aus. Die anaerobe Reaktionszone 5 kann sich in radialer Richtung über den Reaktionskörper 8 hinaus in das angrenzende Rohwasser erstrecken.

Grundsätzlich kann sich aber auch durch den kegelförmigen Sauerstoffeintrag in das Rohwasser ein kegelförmiger aerober Bereich 20 (vgl. Fig. 4) ausbilden, in dem es überwiegend zur Nitrifikation kommt. In den übrigen Reaktorbereichen liegt dann ein geringerer Sauerstoffgehalt vor. Diese übrigen Reaktorbereiche sind dann überwiegend bis ausschließlich für die Denitrifikation oder ggf. auch für Nitrifikation und Denitrifikation vorgesehen. Die Reaktionszonen für die Nitrifikation und die Denitrifikation müssen also nicht zwingend in radialer Richtung nachfolgend angeordnet sein. Die Ausbildung der Reaktionszonen hängt ab unter anderem von dem Volumenstrom des zugeführten Oxidationsmittels, der Zufuhr von gasförmigem oder flüssigem Reaktionsmittel und der Drehzahl des Reaktionskörpers 8.

Gemäß Fig. 5 kommt es bei höherer Drehzahl des Reaktionskörpers 8 zu einer stärkeren Umwälzung und Mitnahme des eingetragenen Sauerstoffs durch den sich drehenden Reaktionskörper 8 und damit zu einer breiteren mit Sauerstoff angereicherten Bereich 20.

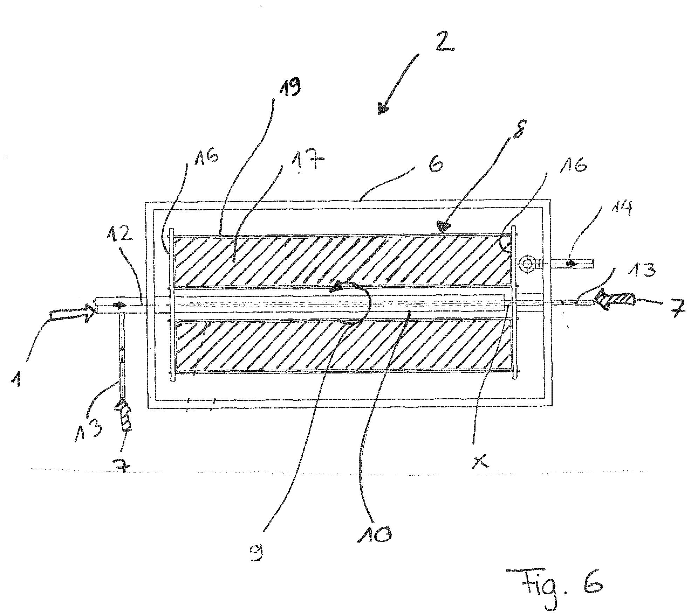

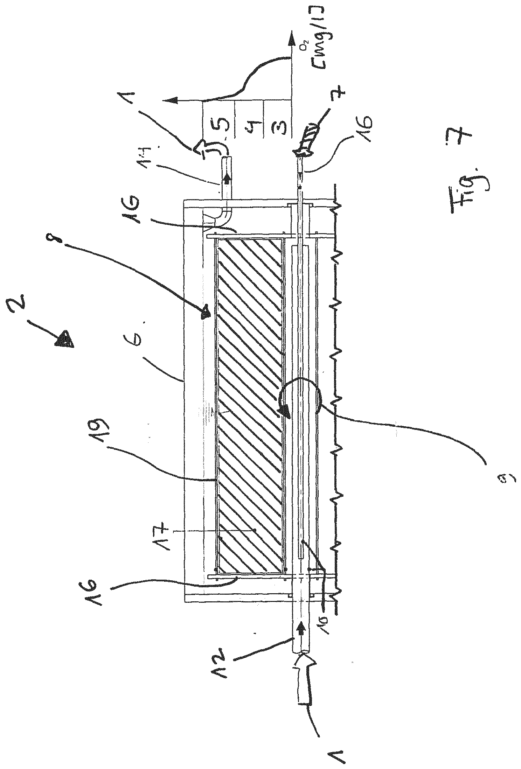

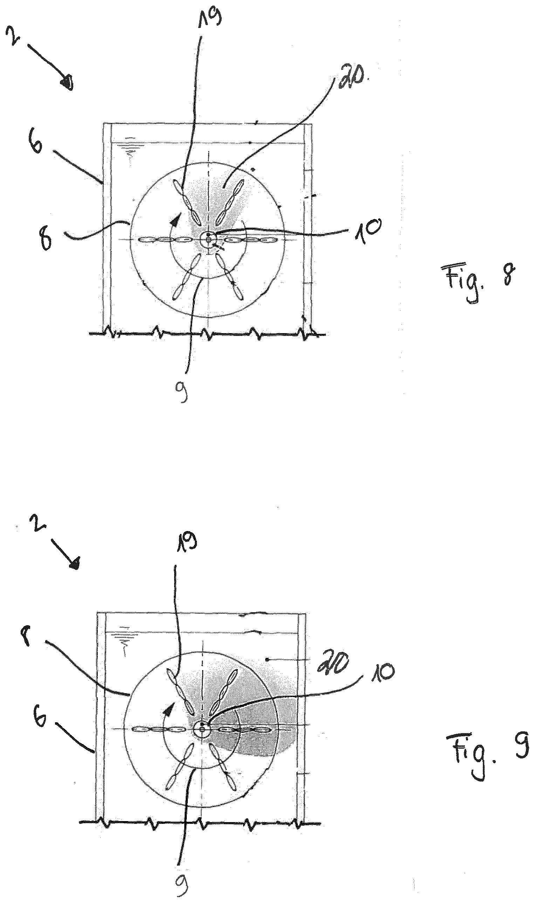

In den Fign. 6 bis 9 ist eine andere Ausführungsform eines Reaktors 2 zur biologischen Stickstoffelimination mit autotropher Nitrifikation und anschließender vorzugsweise autotropher Denitrifikation gezeigt. Nachfolgend werden lediglich die Unterschiede zwischen den gezeigten Reaktor-Bauformen erläutert. Gleiche Bezugszeichen der in den Fign. 2 bis 5 gezeigten Ausführungsform und der in den Fign. 6 bis 9 gezeigten Ausführungsform kennzeichnen gleiche Merkmale.

Im Unterschied zu der in den Fig. 2 bis 5 gezeigten Ausführungsform ist gemäß den Fign. 6 bis 9 ein plattenförmiger Biofilmträger als Reaktionskörper 8 vorgesehen. Der Reaktionskörper 8 wird bei dem gezeigten Ausführungsbeispiel durch mehrere, vorliegend sechs, sternförmig angeordnete Tragelemente 19 gebildet, wobei jedes Tragelement 19 aus einem netz- oder gitterartigen Trägermaterial bestehen kann, an dem vorwiegend die Nitrifizierer aufwachsen können. Alternativ oder ergänzend kann ein Tragelement 19 auch zur Immobilisierung eines geeigneten Trägermaterials für die Nitrifizierer ausgebildet sein und/oder ein solches Trägermaterial aufweisen. Auch zwischen benachbarten Tragelementen 19 kann ein geeignetes Trägermaterial immobilisiert sein.

Im Übrigen ergibt sich aus Fig. 6, dass eine Oxidationsmittelzufuhr zum einen mit dem Rohwasserstrom 1 im Gleichstrom und zum anderen auf der gegenüberliegenden Seite im Gegenstrom zum Rohwasser vorgesehen sein kann, um eine intensive und/oder gleichmäßige Sauerstoffanreicherung des Rohwassers zu erreichen. Beispielsweise kann zusammen mit dem Rohwasser Luft als Oxidationsmittel zugeführt werden, während im Gegenstrom Wasserstoffperoxid zugeführt wird.

### Bezugszeichenliste:

- 1: Rohwasserstrom
- 2: Reaktor
- 3: Reaktionszone
- 4: Reaktionszone
- 5: Reaktionszone
- 6: Reaktorbehälter
- 7: Oxidationsmittelstrom
- 8: Reaktionskörper
- 9: Pfeil
- 10: Rohr
- 11: Zulauf
- 12: Leitung
- 13: Leitung
- 14: Ablauf
- 15: Gittermaterial
- 16: Lochscheibe
- 17: Trägermaterial
- 18: Sauerstoffkonzentration
- 19: Tragelement
- 20: Bereich

## Patentansprüche

1. Verfahren zur biologischen Stickstoffelimination aus Rohwasser mit autotropher Nitrifikation und anschließender Denitrifikation, wobei Rohwasser durch mindestens einen gemeinsamen Rotationszylinder-Reaktor nach einem der Ansprüche 10 bis 13 mit mindestens drei nachfolgenden Reaktionszonen geleitet wird,
wobei durch Zugabe von wenigstens einem gasförmigen und/oder flüssigen Oxidationsmittel in den Reaktor eine erste Reaktionszone auf Milieubedingungen für die mikrobielle Nitrifikation und eine nachfolgende weitere Reaktionszone auf Milieubedingungen für die mikrobielle Denitrifikation und wenigstens eine zwischen der ersten und der weiteren Reaktionszone angeordnete mittlere Reaktionszone auf Milieubedingungen für die mikrobielle Nitrifikation und die mikrobielle Denitrifikation eingestellt werden, wobei das gasförmige und/oder flüssige Oxidationsmittel axial entlang der Längsachse des Reaktors in den Reaktor einströmt und radial entlang der Längsachse in die erste Reaktionszone übergeht,
wobei die Konzentration an gelöstem Sauerstoff über die Reaktionszonen abnimmt, wobei die erste Reaktionszone auf aerobe Bedingungen und auf eine Konzentration an gelöstem Sauerstoff von mindestens 2,5 mg/l eingestellt wird,
wobei die mittlere Reaktionszone auf eine mittlere Konzentration an gelöstem Sauerstoff, die kleiner als die mittlere Konzentration an gelöstem Sauerstoff in der ersten Reaktionszone und größer als die mittlere Konzentration an gelöstem Sauerstoff in der weiteren Reaktionszone ist, und auf eine Konzentration an gelöstem Sauerstoff von mindestens 0,5 bis 2,5 mg/l eingestellt wird und wobei die weitere Reaktionszone auf anaerobe Bedingungen und auf eine Konzentration an gelöstem Sauerstoff von höchstens 0,5 ml/l eingestellt wird und wobei die Denitrifikation autotroph durchgeführt wird.

2. Verfahren nach Anspruch 1, wobei das Verfahren in einem Reaktor mit mindestens einem Reaktionskörper durchgeführt wird, wobei der Reaktionskörper ein zum Aufwachsen eines Biofilms geeignetes Trägermaterial aufweist und wobei das Trägermaterial eine glatte Oberfläche mit einer Rauheit im Bereich von 0 bis 15 µm, insbesondere im Bereich von 0 bis 8 µm, weiter insbesondere bestimmt gemäß EN ISO 25178 und/oder EN ISO 4287, aufweist.

3. Verfahren nach einem der vorangehenden Ansprüche, wobei das Rohwasser 10 bis 30 h, insbesondere bis 25 h, weiter insbesondere 16 bis 20 h, in den Reaktionszonen verweilt.

4. Verfahren nach einem der vorangehenden Ansprüche, wobei die erste Reaktionszone auf eine Konzentration an gelöstem Sauerstoff von mindestens 3,0 mg/l eingestellt wird.

5. Verfahren nach einem der vorangehenden Ansprüche, wobei das Rohwasser 0,1 bis 3 h, insbesondere 0,5 bis 2,5 h, weiter insbesondere 1 bis 2 h, in der ersten Reaktionszone verweilt.

6. Verfahren nach einem der vorangehenden Ansprüche, wobei die weitere Reaktionszone auf eine Konzentration an gelöstem Sauerstoff von weniger als 0,1 mg/l eingestellt wird.

7. Verfahren nach einem der vorangehenden Ansprüche, wobei das Rohwasser 0,1 bis 5 h, vorzugsweise 0,5 bis 3 h, insbesondere 1 h, in der weiteren Reaktionszone verweilt.

8. Verfahren nach einem der vorangehenden Ansprüche, wobei die mittlere Reaktionszone auf eine Konzentration an gelöstem Sauerstoff auf bis 2,0 mg/l eingestellt wird.

9. Verfahren nach einem der vorangehenden Ansprüche, wobei das Rohwasser 5 bis 20 h, insbesondere 10 bis 15 h, in der mittleren Reaktionszone verweilt.

10. Reaktor (2) zur biologischen Stickstoffelimination aus Rohwasser mit autotropher Nitrifikation und anschließender Denitrifikation, wobei der Reaktor (2) wenigstens einen Reaktionskörper (8) zur Besiedlung mit Mikroorganismen aufweist, ausgebildet zur Durchführung eines Verfahrens nach einem der vorhergehenden Ansprüche,
**dadurch gekennzeichnet,**
**dass** der Reaktionskörper (8) als um eine horizontale Achse rotierender Rotationszylinder mit einem perforierten Rohr (10) zur Zufuhr von flüssigen und/oder gasförmigen Oxidationsmitteln und Rohwasser ausgebildet ist und beim Durchströmen des Reaktors (2) mit einem Rohwasser um eine eigene Achse rotiert, wobei der Reaktionskörper (8) im eingefahrenen Zustand des Reaktors Reaktionszonen (3, 4, 5) für Nitrifizierer und Denitrifizierer aufweist, wobei die Milieubedingungen im Reaktor durch Zugabe von wenigstens einem gasförmigen und/oder flüssigen Oxidationsmittel in den Reaktor (2) derart eingestellt sind, dass bei rotierendem Reaktionskörper (8) in wenigstens einer radial innenliegenden Reaktionszone (3) eine überwiegend mikrobielle Nitrifikation und in wenigstens einer radial außenliegenden Reaktionszone (5) eine überwiegend mikrobielle Denitrifikation stattfindet und wobei wenigstens eine Messeinrichtung zur Messung der Sauerstoffkonzentration von wenigstens einer Reaktionszone (3, 4, 5) vorgesehen ist.

11. Reaktor (2) nach Anspruch 10, **dadurch gekennzeichnet, dass** der Reaktionskörper (8) mindestens ein für den Bewuchs mit Nitrifizierern und/oder die Ausbildung eines Biofilms mit Nitrifizierern geeignetes Trägermaterial (17) aufweist, wobei das Trägermaterial (17) eine glatte Oberfläche mit einer Rauheit im Bereich von 0 bis 15 µm, insbesondere im Bereich von 0 bis 8 µm, aufweist, insbesondere bestimmt gemäß EN ISO 25178 und/oder EN ISO 4287.

12. Reaktor (2) nach einem der Ansprüche 10 oder 11, **dadurch gekennzeichnet, dass** der Reaktionskörper (8) eine Netz- oder Gitterstruktur aufweist, durch die wenigstens ein Aufnahmebereich für Trägermaterial (17) für die Nitrifizierer geschaffen wird, wobei, vorzugsweise, der Reaktionskörper (8) durch ein spiralförmig um die Drehachse gewickeltes Netz- oder Gitterwerk gebildet wird.

13. Reaktor (2) nach einem der Ansprüche 10 bis 12, **dadurch gekennzeichnet, dass** das Trägermaterial für die Nitrifizierer in mehreren im Wesentlichen konzentrisch zur Drehachse des Reaktionskörpers (8) angeordneten und vorzugsweise in radialer Richtung voneinander getrennten Aufnahmebereichen immobilisiert ist.

## Claims

1. Process for biological nitrogen elimination from raw water with autotrophic nitrification and subsequent denitrification, wherein raw water is passed through at least one common rotary cylinder reactor according to any of claims 10 to 13 with at least three subsequent reaction zones,
wherein by addition of at least one gaseous and/or liquid oxidizing agent into the reactor, a first reaction zone is adjusted to milieu conditions for microbial nitrification and a subsequent further reaction zone is adjusted to milieu conditions for microbial denitrification, and at least one intermediate reaction zone arranged between the first and the further reaction zone is adjusted to milieu conditions for microbial nitrification and microbial denitrification, wherein the gaseous and/or liquid oxidant flows into the reactor axially along the longitudinal axis of the reactor and passes radially along the longitudinal axis into the first reaction zone,
wherein the dissolved oxygen concentration decreases over the reaction zones, wherein the first reaction zone is set to aerobic conditions and to a dissolved oxygen concentration of at least 2.5 mg/l, wherein the intermediate reaction zone is set to an average dissolved oxygen concentration which is smaller than the average dissolved oxygen concentration in the first reaction zone and larger than the average dissolved oxygen concentration in the further reaction zone, and to a dissolved oxygen concentration of at least 0.5 to 2.5 mg/l, and wherein the further reaction zone is set to anaerobic conditions and to a dissolved oxygen concentration of at most 0.5 ml/l, and wherein the denitrification is carried out autotrophically.

2. Process according to claim 1, wherein the process is carried out in a reactor having at least one reaction body, wherein the reaction body comprises a support material suitable for growing a biofilm and wherein the support material has a smooth surface with a roughness in the range from 0 to 15 µm, in particular in the range from 0 to 8 µm, further determined in particular according to EN ISO 25178 and/or EN ISO 4287.

3. Process according to any of the preceding claims, wherein the raw water remains in the reaction zones for 10 to 30 h, in particular up to 25 h, further in particular 16 to 20 h.

4. Process according to any of the preceding claims, wherein the first reaction zone is adjusted to a dissolved oxygen concentration of at least 3.0 mg/l.

5. Process according to any of the preceding claims, wherein the raw water dwells in the first reaction zone for 0.1 to 3 h, in particular 0.5 to 2.5 h, further in particular 1 to 2 h.

6. Process according to any of the preceding claims, wherein the further reaction zone is adjusted to a dissolved oxygen concentration of less than 0.1 mg/l.

7. Process according to any of the preceding claims, wherein the raw water dwells in the further reaction zone for 0.1 to 5 h, preferably 0.5 to 3 h, in particular 1 h.

8. Process according to any of the preceding claims, wherein the intermediate reaction zone is adjusted to a dissolved oxygen concentration of up to 2.0 mg/l.

9. Process according to any of the preceding claims, wherein the raw water dwells in the middle reaction zone for 5 to 20 h, in particular for 10 to 15 h.

10. Reactor (2) for biological nitrogen elimination from raw water with autotrophic nitrification and subsequent denitrification, the reactor (2) having at least one reaction body (8) for colonization with microorganisms, designed for carrying out a process according to any of the preceding claims,
**characterized**
**in that** the reaction body (8) is designed as a rotary cylinder rotating around a horizontal axis and having a perforated tube (10) for the supply of liquid and/or gaseous oxidizing agents and raw water, and rotates around its own axis when raw water flows through the reactor (2), the reaction body (8) having reaction zones (3, 4, 5) for nitrifiers and denitrifiers in the run-in state of the reactor, the environmental conditions in the reactor being set by adding at least one gaseous and/or liquid oxidizing agent to the reactor (2) in such a way that, when the reaction body (8) is rotating, predominantly microbial nitrification takes place in at least one radially inner reaction zone (3) and predominantly microbial denitrification takes place in at least one radially outer reaction zone (5), and at least one measuring device being provided for measuring the oxygen concentration of at least one reaction zone (3, 4, 5).

11. Reactor (2) according to claim 10, **characterized in that** the reaction body (8) has at least one support material (17) suitable for growth with nitrifiers and/or the formation of a biofilm with nitrifiers, the support material (17) having a smooth surface with a roughness in the range from 0 to 15 µm, in particular in the range from 0 to 8 µm, in particular determined in accordance with EN ISO 25178 and/or EN ISO 4287.

12. Reactor (2) according to any of claims 10 or 11, **characterized in that** the reaction body (8) has a net or grid structure by means of which at least one receiving area for carrier material (17) for the nitrifiers is created, wherein, preferably, the reaction body (8) is formed by a net or grid structure wound spirally around the axis of rotation.

13. Reactor (2) according to any of claims 10 to 12, **characterized in that** the carrier material for the nitrifiers is immobilized in a plurality of receiving regions arranged essentially concentrically to the axis of rotation of the reaction body (8) and preferably separated from one another in the radial direction.

## Revendications

1. Procédé d'élimination biologique de l'azote à partir d'eau brute avec nitrification autotrophe suivie d'une dénitrification, dans lequel l'eau brute est conduite à travers au moins un réacteur commun à cylindre rotatif selon l'une des revendications 10 à 13 avec au moins trois zones de réaction subséquentes,
dans lequel, par addition d'au moins un agent oxydant gazeux et/ou liquide dans le réacteur, une première zone de réaction est ajustée aux conditions du milieu pour la nitrification microbienne et une autre zone de réaction suivante est ajustée aux conditions du milieu pour la dénitrification microbienne et au moins une zone de réaction intermédiaire disposée entre la première zone de réaction et l'autre zone de réaction est ajustée aux conditions du milieu pour la nitrification microbienne et la dénitrification microbienne, l'agent oxydant gazeux et/ou liquide s'écoulant dans le réacteur axialement le long de l'axe longitudinal du réacteur et passant radialement le long de l'axe longitudinal dans la première zone de réaction,
dans lequel la concentration en oxygène dissous diminue à travers les zones de réaction, la première zone de réaction étant adaptée à des conditions aérobies et à une concentration en oxygène dissous d'au moins 2,5 mg/l, la zone de réaction moyenne étant adaptée à une concentration moyenne en oxygène dissous, qui est inférieure à la concentration moyenne d'oxygène dissous dans la première zone de réaction et supérieure à la concentration moyenne d'oxygène dissous dans l'autre zone de réaction, et une concentration d'oxygène dissous d'au moins 0,5 à 2,5 mg/l, et dans lequel l'autre zone de réaction est réglée sur des conditions anaérobies et une concentration d'oxygène dissous d'au plus 0,5 ml/l, et dans lequel la dénitrification est effectuée de manière autotrophe.

2. Procédé selon la revendication 1, dans lequel le procédé est réalisé dans un réacteur avec au moins un corps de réaction, dans lequel le corps de réaction présente un matériau de support approprié pour la croissance d'un biofilm et dans lequel le matériau de support présente une surface lisse avec une rugosité dans la plage de 0 à 15 µm, en particulier dans la plage de 0 à 8 µm, en outre déterminée en particulier selon EN ISO 25178 et/ou EN ISO 4287.

3. Procédé selon l'une des revendications précédentes, dans lequel l'eau brute séjourne dans les zones de réaction pendant 10 à 30 h, en particulier jusqu'à 25 h, en particulier encore 16 à 20 h.

4. Procédé selon l'une quelconque des revendications précédentes, dans lequel la première zone de réaction est ajustée à une concentration en oxygène dissous d'au moins 3,0 mg/l.

5. Procédé selon l'une des revendications précédentes, dans lequel l'eau brute séjourne dans la première zone de réaction pendant 0,1 à 3 h, en particulier pendant 0,5 à 2,5 h, plus particulièrement pendant 1 à 2 h.

6. Procédé selon l'une quelconque des revendications précédentes, dans lequel la zone réactionnelle supplémentaire est ajustée à une concentration en oxygène dissous inférieure à 0,1 mg/l.

7. Procédé selon l'une des revendications précédentes, dans lequel l'eau brute séjourne dans la zone de réaction supplémentaire pendant 0,1 à 5 h, de préférence pendant 0,5 à 3 h, en particulier pendant 1 h.

8. Procédé selon l'une quelconque des revendications précédentes, dans lequel la zone de réaction moyenne est ajustée à une concentration en oxygène dissous allant jusqu'à 2,0 mg/l.

9. Procédé selon l'une des revendications précédentes, dans lequel l'eau brute séjourne dans la zone de réaction moyenne pendant 5 à 20 heures, en particulier pendant 10 à 15 heures.

10. Réacteur (2) pour l'élimination biologique de l'azote à partir d'eau brute avec nitrification autotrophe suivie d'une dénitrification, le réacteur (2) présentant au moins un corps de réaction (8) destiné à être colonisé par des microorganismes, conçu pour la mise en œuvre d'un procédé selon l'une des revendications précédentes,
**caractérisé**
**en ce que** le corps de réaction (8) est réalisé sous forme de cylindre rotatif tournant autour d'un axe horizontal avec un tube perforé (10) pour l'amenée d'agents oxydants liquides et/ou gazeux et d'eau brute et tourne autour d'un axe propre lors du passage d'une eau brute dans le réacteur (2), le corps de réaction (8) présentant, à l'état rétracté du réacteur, des zones de réaction (3, 4, 5) pour les nitrifiants et les dénitrifiants, les conditions du milieu dans le réacteur étant réglées par addition d'au moins un agent oxydant gazeux et/ou liquide dans le réacteur (2) de telle sorte que, lorsque le corps de réaction (8) est en rotation, une nitrification principalement microbienne a lieu dans au moins une zone de réaction (3) située radialement à l'intérieur et une dénitrification principalement microbienne a lieu dans au moins une zone de réaction (5) située radialement à l'extérieur, et au moins un dispositif de mesure étant prévu pour mesurer la concentration en oxygène d'au moins une zone de réaction (3, 4, 5).

11. Réacteur (2) selon la revendication 10, **caractérisé en ce que** le corps de réaction (8) présente au moins un matériau de support (17) approprié pour la croissance avec des nitrifiants et/ou la formation d'un biofilm avec des nitrifiants, le matériau de support (17) présentant une surface lisse avec une rugosité dans la plage de 0 à 15 µm, en particulier dans la plage de 0 à 8 µm, déterminée en particulier selon EN ISO 25178 et/ou EN ISO 4287.

12. Réacteur (2) selon l'une des revendications 10 ou 11, **caractérisé en ce que** le corps réactionnel (8) présente une structure réticulée ou grillagée par laquelle est créée au moins une zone de réception de matériau support (17) pour les nitrifiants, le corps réactionnel (8) étant, de préférence, formé par un réseau réticulé ou grillagé enroulé en spirale autour de l'axe de rotation.

13. Réacteur (2) selon l'une des revendications 10 à 12, **caractérisé en ce que** le matériau support pour les nitrifiants est immobilisé dans plusieurs zones de réception disposées de manière essentiellement concentrique par rapport à l'axe de rotation du corps de réaction (8) et de préférence séparées les unes des autres dans la direction radiale.
